# EUROPÄISCHE PATENTSCHRIFT

(11) **EP 0 927 299 B1**
(45) Veröffentlichungstag und Bekanntmachung des Hinweises auf die Patenterteilung: **23.11.2005**
(21) Anmeldenummer: 98937565.4
(22) Anmeldetag: 10.07.1998
(51) Int. Cl.: F02K 9/64, C04B 35/80

(54) **BRENNKAMMER UND VERFAHREN ZUR HERSTELLUNG EINER BRENNKAMMER**
COMBUSTION CHAMBER AND METHOD FOR PRODUCING A COMBUSTION CHAMBER
CHAMBRE DE COMBUSTION ET PROCEDE PERMETTANT DE REALISER UNE CHAMBRE DE COMBUSTION

(30) Priorität: 17.07.1997 DE 19730674
(43) Veröffentlichungstag der Anmeldung: 07.07.1999
(73) Patentinhaber: Deutsches Zentrum für Luft- und Raumfahrt e.V., 53175 Bonn (DE)
(72) Erfinder: HAIDN, Oskar, D-74243 Langen-Brettach (DE); HALD, Hermann, D-71229 Leonberg (DE); LEZUO, Michael, D-74249 Jagsthausen (DE); WINKELMANN, Peter, D-71394 Kernen (DE)
(74) Vertreter: Beck, Jürgen
(86) Internationale Anmeldenummer: PCT/EP1998/004285
(87) Internationale Veröffentlichungsnummer: WO 1999/004156

(56) Entgegenhaltungen:
- EP-A- 0 249 393
- EP-A- 0 401 107
- DE-A- 3 320 556
- DE-A- 19 616 838
- GB-A- 2 196 393
- US-A- 2 183 313
- US-A- 2 658 332
- US-A- 3 095 283
- US-A- 3 303 654
- BILL J ET AL: "Polymer-Derived Ceramic Coatings on C/C-SiC Composites" JOURNAL OF THE EUROPEAN CERAMIC SOCIETY, Bd. 16, Nr. 10, 1996, Seite 1115-1120 XP004047417

## Beschreibung

Die vorliegende Erfindung betrifft eine transpirationsgekühlte Brennkammer, insbesondere für ein Raketentriebwerk, umfassend einen Brennraum, einen den Brennraum umschließenden Innenmantel, einen den Innenmantel umschließenden Außenmantel und zwischen dem Innenmantel und dem Außenmantel ausgebildete Kühlmittelkanäle, wobei der Außenmantel aus einem Faserkeramikmaterial gebildet ist.

Ferner betrifft die vorliegende Erfindung ein Verfahren zur Herstellung einer solchen transpirationsgekühlten Brennkammer.

Beispielsweise aus dem Artikel von M. Popp und G. Schmidt: "Rocket Engine Combustion Chamber Design Concepts for Enhanced Life", AIAA 96-3303, 32. Joint Propulsion Conference vom 1. bis 3. Juni 1996, Lake Buena Vista, Florida, sind Brennkammern der eingangs genannten Art bekannt, die einen sehr gut wärmeleitenden Innenmantel aus einer Kupferlegierung, der an seiner Außenseite eine Vielzahl von Rippen aufweist, und einen Außenmantel aus Nickel umfassen, der den Innenmantel aus der Kupferlegierung umschließt und die mechanischen Lasten während des Betriebs der Brennkammer trägt. Dabei umgrenzen die Außenseite und die Rippen des Innenmantels aus der Kupferlegierung sowie die Innenseite des Außenmantels aus Nickel Kühlmittelkanäle, die von einem Kühlmittel, beispielsweise flüssigem Wasserstoff, unter einem im Vergleich zum Brennraumdruck höheren Druck durchströmbar sind. Die während der Verbrennung im Brennraum an die Brennkammerwand abgegebene Reaktionswärme wird durch den wärmeleitfähigen Innenmantel auf das Kühlmittel in den Kühlmittelkanälen übertragen und von demselben abtransportiert. Ein solches Kühlverfahren wird als Regenerativkühlung bezeichnet.

Brennkammern der vorstehend genannten Art werden dadurch hergestellt, daß der Innenmantel aus der Kupferlegierung einstückig hergestellt wird, die Rippen an der Außenseite des Innenmantels durch mechanische Bearbeitung ausgebildet werden, die Zwischenräume zwischen den Rippen mit einem Wachs gefüllt werden, der Außenmantel aus Nickel elektrophoretisch aufgetragen und anschließend das in den Zwischenräumen zwischen den Rippen des Innenmantels enthaltene Wachs ausgeschmolzen wird.

Moderne Hochleistungsraketentriebwerke weisen so hohe Brennraumdrücke (bis zu 230 bar) und so hohe Wärmeflüsse an der Brennkammerinnenwand auf, daß die thermische Belastbarkeit und die mechanische Tragfähigkeit der Brennkammern der vorstehend genannten Art bis zum äußersten ausgereizt sind, so daß bereits kleine Unregelmäßigkeiten im Kühlbetrieb, beispielsweise ein kurzzeitiger Druckabfall im Kühlkreislauf, in Sekundenbruchteilen zu einem thermischen Versagen, beispielsweise durch Schmelzen der Kupferlegierung des Innenmantels, führen können.

Zur Steigerung der zulässigen Brennraumdrücke und -temperaturen wurden (ebenfalls in dem vorstehend genannten Artikel) bereits Brennkammern mit sogenannter Transpirationskühlung vorgeschlagen. Bei der Transpirationskühlung wird ein Teil des Kühlmittels aus den Kühlmittelkanälen durch Poren in dem Innenmantel der Brennkammer in den Brennraum gepreßt, wo er vor der Brennkammerinnenwand einen Grenzschichtfilm ausbildet, der die heißen Reaktionsprodukte von der Wandung abschirmt und den konvektiven Wärmeübergang von dem Brennraum in den Innenmantel der Brennkammer vermindert. Wird ein flüssiges Kühlmittel verwendet, so wird ein zusätzlicher Kühleffekt dadurch bewirkt, daß das Kühlmittel bei der Bildung des Grenzschichtfilmes verdampft und dabei latente Wärme aufnimmt .

Als Material für den porösen Innenmantel einer transpirationsgekühlten Brennkammer wurden bislang poröse Metalle sowie poröse Massivkeramiken vorgeschlagen.

Bei der Verwendung poröser Metalle ist jedoch von Nachteil, daß bei einem lokalen Abreißen des Grenzschichtfilms durch lokale Überhitzung ein sogenannter "hot spot" entstehen kann, in dessen Bereich das Metall an seiner Oberfläche versintert, was zu einem Verschluß der Poren des porösen Metalls führt. Aufgrund des Porenverschlusses geht die Kühlwirkung an der betreffenden Stelle zurück, so daß sich der Versinterungsprozeß selbst verstärkt und zu einer Zerstörung der porösen Metallstruktur bis hin zum Schmelzen führt.

Die Verwendung poröser Massivkeramiken hat den Nachteil, daß diese Keramiken eine hohe Sprödigkeit und eine hohe Thermoschockempfindlichkeit aufweisen. In diesen Keramiken können daher aufgrund der hohen Temperaturgradienten, wie sie insbesondere während des Anfahrens und beim Abstellen eines Triebwerks auftreten, Risse entstehen, die zu einem ungleichmäßigen Durchtritt von Kühlmittel führen und den Grenzschichtfilm instabil werden lassen.

Aufgrund der genannten Nachteile ist mit den bislang vorgestellten Brennkammerkonzepten ein sicherer Betrieb nur bei Einblasung extrem hoher Kühlmassenströme möglich. Dies würde jedoch erhebliche Effizienzeinbußen des Triebwerks, nämlich einen geringeren spezifischen Impuls, zur Folge haben.

Die GB-A 2 196 393 offenbart ein Antriebssystem mit einer Verbrennungsvorrichtung, welche eine Brennkammer umfaßt mit einer Innenwand aus gewebten Siliziumcarbidfasern und einer Außenwand aus gewebten Siliziumcarbidfasern.

Die EP 0 401 107 offenbart ein Staustrahltriebwerk zur Überschallverbrennung, bei dem Injektionsringe aus einem keramischen Material vorgesehen sind.

Der Artikel "Polymer-Derived Ceramic Coatings on C/C-SiC Composites" von J. Bill und B. Heimann in Journal of the European Ceramic Society 16 (1996), 1115 bis 1120 offenbart eine Schutzschicht zur Vergrößerung der Oxidationsstabilität von Kohlenstoff-verstärktem Siliziumcarbid (C/C-SiC).

Die US-A2 658 332 offenbart eine Verbrennungsvorrichtung, welche eine Brennkammer umfaßt, deren Wände aus einem keramischen Material hergestellt sind.

Die DE-A-33 20 556 offenbart eine Kühlwand einer Brennkammer eines Raketentriebwerks, bei der ein eingezogener Abschnitt aus einem porösen Material mit Flüssigkeit durch Poren abgebender Kühlwirkung gebildet ist.

Die US-A-3 303 654 offenbart eine Brennkammer mit einem metallischen Gehäuse, wobei an einer Wand ein ringförmiges Graphitteil angeordnet ist.

Der vorliegenden Erfindung liegt daher die Aufgabe zugrunde, eine Brennkammer der eingangs genannten Art zu schaffen, deren Mantel eine verbesserte thermische Beständigkeit und eine erhöhte mechanische Tragfähigkeit aufweist.

Diese Aufgabe wird erfindungsgemäß bei der Brennkammer gemäß Anspruch 1 gelöst.

Unter einem Faserkeramikmatrial ist dabei ein Material zu verstehen, das aus in eine Keramikmatrix eingebetteten Fasern besteht.

Faserkeramiken, auch unter der Bezeichnung CMC (für "Ceramic Matrix Composites") bekannt, zeichnen sich durch eine hohe Temperaturbeständigkeit und eine äußerst geringe Thermoschockempfindlichkeit aus, durch die sich diese Materialien als Material für den Brennkammer-Innenmantel eignen. Insbesondere führen bei Verwendung einer Faserkeramik für den Innenmantel kurzzeitig auftretende "hot spots" nicht direkt zu einer Zerstörung des Materials. Die erfindungsgemäße Brennkammer weist somit eine hohe Schadenstoleranz auf.

Aufgrund des Faseranteils weisen die Faserkeramikmaterialien eine hohe Zugfestigkeit auf, durch die sich diese Materialien als Material für den Brennkammer-Außenmantel eignen.
Da sowohl der Innenmantel als auch der Außenmantel der erfindungsgemäßen Brennkammer aus hochtemperaturbeständigem Material gebildet sind, kann die Brennkammer als "heiße Struktur" betrieben werden, d.h. die Betriebstemperatur des Innen- und des Außenmantels kann deutlich höher liegen als bei herkömmlichen Brennkammern, wodurch die Temperaturdifferenz zwischen dem Brennraum und dem Brennkammermantel reduziert und der Leckwärmefluß aus dem Brennraum in den Brennkammermantel verringert wird. Als Folge hiervon reicht eine kleinere Kühlleistung zur Kühlung des Brennkammermantels aus, so daß der Kühlmitteldurchsatz in den Kühlmittelkanälen verringert werden kann, was es wiederum ermöglicht, zur Förderung des Kühlmittels kleinere Pumpen zu verwenden, die aufgrund ihres geringeren Gewichts eine Erhöhung der Nutzlastkapazität des Raketensystems erlauben. Außerdem kann die Drehzahl der Pumpen reduziert und damit deren Lebensdauer erhöht werden.

Ferner weisen die Faserkeramikmaterialien sehr kleine thermische Ausdehnungskoeffizienten α auf, so daß während des Betriebes nur eine geringe thermische Ausdehnung von Innenmantel und Außenmantel auftritt. Eine Ermüdung des Materials des Innenmantels und des Außenmantels wird somit auch bei häufigem Wechsel des Betriebszustandes weitgehend vermieden.

Dadurch, daß sowohl für den Innenmantel als auch für den Außenmantel der Brennkammer ein Faserkeramikmaterial verwendet wird, tritt das Problem von mechanischen Spannungen aufgrund unterschiedlicher thermischer Ausdehnung des Innen- und des Außenmantels, welches bei herkömmlichen Brennkammern, die einen Innenmantel aus einer Kupferlegierung und einen Außenmantel aus Nickel umfassen, eine große Rolle spielt, nahezu nicht auf.

Ferner weisen die Faserkeramikmaterialien ein geringes spezifisches Gewicht auf, so daß das Gewicht der Brennkammer und damit des Triebwerks insgesamt verringert werden kann, was zu einer Erhöhung der Nutzlastkapazität des gesamten Raketensystems führt.

Höhere Brennraumdrücke und -temperaturen sind erreichbar, wenn die Brennkammer zumindest teilweise, bevorzugt an den thermisch besonders stark belasteten Bereichen, wie beispielsweise dem Düsenhals, transpirationsgekühlt ist. Um eine Transpirationskühlung zu ermöglichen, ist vorzusehen, daß das Material des Innenmantels ein Material mit offener Porosität umfaßt. Unter einem Material mit offener Porosität ist dabei ein Material zu verstehen, dessen Poren nicht voneinander isoliert sind, sondern ein zusammenhängendes Hohlraumsystem bilden, so daß ein Fluid von einer Seite eines aus dem Material mit offener Porosität gebildeten Körpers durch das Hohlraumsystem auf eine gegenüberliegende Seite des Körpers gelangen kann.

Bei einer bevorzugten Ausgestaltung der erfindungsgemäßen Brennkammer umfaßt das Faserkeramikmaterial des Innenmantels und/oder des Außenmantels kohlefaserverstärkten Kohlenstoff (C/C), also ein Material, das aus in eine Kohlenstoffmatrix eingebetteten Kohlefasern besteht.

Statt eines Faserkeramikmaterials kann auch Graphit als Material des Innenmantels verwendet werden. Kohlenstoff weist, insbesondere in einer Wasserstoff- oder Wasserdampf-Umgebung, wie sie wegen der nahezu vollständigen Verbrennung am Rande eines Brennraums in der Regel vorliegt, eine hohe Temperaturbeständigkeit auf. Die Verwendung eines Faserkeramikmaterials für den Innenmantel wird jedoch bevorzugt, da es eine höhere mechanische Festigkeit aufweist und hinsichtlich seiner Mikrostruktur durch die Auswahl der Ausgangsmaterialien und durch die Art des Herstellungsprozesses vielseitiger gestaltbar ist.

Um zu verhindern, daß Kühlmittel aus den Kühlmittelkanälen nach außerhalb der Brennkammer gelangt, ist vorteilhafterweise vorgesehen, daß das Material des Außenmantels keine Porosität aufweist.

Vorzugsweise ist vorgesehen, daß das Material des Außenmantels ein kohlefaserverstärktes Siliziumcarbid umfaßt. Kohlefaserverstärktes Siliziumcarbid (je nach dem verwendeten Herstellverfahren als C/SiC oder als C/C-SiC bezeichnet) besteht im Falle von C/C-SiC aus voneinander isolierten Bereichen aus einer Kohlenstoffmatrix, in die Kohlefasern eingelagert sind (C/C-Zellen) und die ihrerseits in eine Matrix aus Siliziumcarbid eingebettet sind. Die Umhüllung aus Siliziumcarbid schützt die C/C-Zellen vor Oxidation und führt zu einer guten Beständigkeit bei extrem hohen Temperaturen bis zu 1800°C im Dauerbetrieb und bis zu 2700°C im Kurzzeitbetrieb.

Besonders bevorzugt wird eine Ausgestaltung der erfindungsgemäßen Brennkammer, bei der das Material des Außenmantels ein C/C-SiC-Material umfaßt. Dabei handelt es sich um ein kohlefaserverstärktes Siliziumcarbid, das mittels eines sogenannten Flüssigsilizierverfahrens, das beispielsweise in dem Artikel von P. Schanz und W. Krenkel: "Description of the Mechanical and Thermal Behaviour of Liquid Siliconized C/C", Proc. 6th Europ. Conf. on Composite Materials and Associated Conference (ECCM6), Bordeaux, 20. bis 24. September 1993, beschrieben ist und im folgenden noch näher erläutert werden wird, herstellbar ist und dessen Mikrostruktur beim Herstellungsprozeß durch die Wahl der Ausgangsmaterialien und durch die Art der Prozeßführung in einem weiten Bereich variiert werden kann.

Bevorzugte Materialien mit offener Porosität sind ein poröses C/C-Material (kohlefaserverstärkter Kohlenstoff) oder poröser Graphit.

Der Porositätsgrad, d.h. der prozentuale Anteil des Porenvolumens an dem Gesamtvolumen des eine offene Porosität aufweisenden Materials, kann innerhalb des Innenmantels der Brennkammer räumlich konstant sein.

Um bei der Transpirationskühlung eine optimale Generierung des kühlenden Grenzschichtfilmes zu erhalten, ist es jedoch von Vorteil, wenn der Porositätsgrad des eine offene Porosität aufweisenden Materials des Innenmantels in einer radialen Richtung der Brennkammer variiert.

Besonders günstig ist es, wenn der Porositätsgrad des eine offene Porosität aufweisenden Materials des Innenmantels zu der Innenseite des Innenmantels hin zunimmt. Dadurch wird zum einen dem Umstand Rechnung getragen, daß im Innenmantel der Brennkammer ein Temperaturgradient vorhanden ist, so daß sich das Kühlmittel auf dem Weg zu der heißen Innenseite des Innenmantels ausdehnt. Ferner kann eine zusätzliche Porosität im Bereich der Innenseite des Innenmantels zur Dämpfung von Schwankungen des Brennraumdruckes dienen. Das Porenvolumen im Bereich der Innenseite des Innenmantels wirkt nämlich als Ausgleichsvolumen, welches infolge der kleinen Porenzugangsquerschnitte gedrosselt zugänglich ist. Schwankungen des Brennraumdrucks können daher dadurch ausgeglichen werden, daß bei einem Anstieg des Brennraumdrucks eine Fluidströmung in die Poren des Innenmantels hinein und beim Absinken des Brennraumdrucks eine Fluidströmung aus den Poren des Innenmantels heraus stattfindet.

Ferner kann auch vorgesehen sein, daß der Porositätsgrad des eine offene Porosität aufweisenden Materials des Innenmantels in einer Längsrichtung der Brennkammer variiert, um die Menge des lokal zur Bildung des Grenzschichtfilmes dem Brennraum zugeführten Kühlmittels dem jeweiligen Temperatur- und Druckverlauf in der Brennkammer anzupassen.

Zur Kühlung einer Brennkammer kann auch von dem Verfahren der Filmkühlung Gebrauch gemacht werden. Unter Filmkühlung wird dabei ein Kühlverfahren verstanden, bei dem, wie auch bei der Transpirationskühlung, dem Brennraum ein Kühlmittel zur Bildung eines Grenzschichtfilmes zugeführt wird, wobei jedoch das Kühlmittel bei der Filmkühlung durch einen Einblasspalt oder einen porösen Bereich des Innenmantels zugeführt wird, der stromaufwärts von der durch den gebildeten Grenzschichtfilm zu kühlenden Brennkammerwandfläche angeordnet ist, während das Kühlmittel bei der Transpirationskühlung großflächig durch Poren in der zu kühlenden Brennkammerwandfläche selbst zugeführt wird.

Bei der Filmkühlung folgen daher der Kühlmittelzuführbereich und der Filmkühlungsbereich in Strömungsrichtung des Gasgemisches in dem Brennraum aufeinander, während bei der Transpirationskühlung der Kühlmittelzuführbereich und der Transpirationskühlungsbereich zusammenfallen.

Um eine solche Filmkühlung der Brennkammer zu ermöglichen, weist der Innenmantel der Brennkammer einen Kühlmittelzuführbereich auf, durch den ein Kühlmittel dem Brennraum zuführbar ist, und einen Filmkühlungsbereich auf, der kein poröses Material umfaßt, wobei der Filmkühlungsbereich in Längsrichtung der Brennkammer, insbesondere im wesentlichen in Strömungsrichtung des Gasgemisches in dem Brennraum, auf den Kühlmittelzuführbereich folgt.

Zur Bildung des Grenzschichtfilms kann das Kühlmittel dem Brennraum dadurch zugeführt werden, daß der Kühlmittelzuführbereich des Innenmantels ein Material mit einer offenen Porosität umfaßt.

Alternativ oder ergänzend hierzu kann auch vorgesehen sein, daß der Kühlmittelzuführbereich des Innenmantels von mindestens einem Injektionskanal durchsetzt wird, welcher einen Kühlmittelkanal mit dem Brennraum verbindet.

Die Methoden der Filmkühlung und der Transpirationskühlung können bei einer erfindungsgemäßen Brennkammer auch kombiniert angewandt werden, wenn der Innenmantel der Brennkammer einen Transpirationskühlungsbereich aufweist, der ein Material mit einer offenen Porosität umfaßt und in Längsrichtung der Brennkammer auf den Filmkühlungsbereich folgt.

Ferner kann vorgesehen sein, daß ein Bereich des Innenmantels an seiner Innenseite eine Beschichtung aus einem TBC-Material aufweist. Unter einem TBC-Material (von "Thermal Barrier Coating") ist ein Material mit einer geringen Wärmeleitfähigkeit zu verstehen. In dem TBC-Material an der Innenseite des Innenmantels bildet sich demnach ein steiler Temperaturgradient aus, so daß die Temperaturen und Temperaturgradienten in dem Material des Innenmantels verringert werden. Beschichtungen aus einem TBC-Material werden vorzugsweise an den Stellen des Innenmantels eingesetzt, die nicht transpirativ, sondern regenerativ oder filmgekühlt werden.

Von Vorteil ist es, wenn die Kühlmittelkanäle einen in Längsrichtung der Brennkammer variierenden Querschnitt aufweisen. Auf diese Weise kann der lokale Kühlmittelstrom dem jeweils lokal auftretenden Wärmestrom in das Kühlmittel angepaßt werden.

Die Kühlmittelkanäle können als Ausnehmungen an der Außenseite des Innenmantels und/oder als Ausnehmungen an der Innenseite des Außenmantels ausgebildet sein.

Ferner ist es günstig, wenn die erfindungsgemäße Brennkammer einen Einspritzkopf aufweist, der aus einem Faserkeramikmaterial gebildet ist. Dadurch wird das Entstehen mechanischer Spannungen zwischen dem Brennkammermantel und dem Einspritzkopf aufgrund unterschiedlicher thermischer Ausdehnungskoeffizienten vermieden.

Besonders günstig ist es, wenn der Einspritzkopf einstückig mit dem Innenmantel und/oder dem Außenmantel der Brennkammer ausgebildet ist. In diesem Fall braucht der Einspritzkopf nicht separat gefertigt und später angefügt zu werden, sondern kann in kosten- und zeitsparender Weise gemeinsam mit dem Brennkammermantel hergestellt werden.

Ist vorteilhafterweise vorgesehen, daß das Material des Einspritzkopfes ein Material mit einer offenen Porosität umfaßt, so kann auch der Einspritzkopf mittels Transpirationskühlung gekühlt werden.

Der Erfindung liegt die weitere Aufgabe zugrunde, ein Verfahren zur Herstellung einer transpirationsgekühlten Brennkammer, insbesondere für ein Raketentriebwerk, umfassend einen Brennraum, einen den Brennraum umschließenden Innenmantel, einen den Innenmantel umschließenden Außenmantel und zwischen dem Innenmantel und dem Außenmantel ausgebildete Kühlmittelkanäle wobei der Außenmantel aus einem Faserkeramikmaterial gebildet ist und der Innenmantel aus einem Faserkeramikmaterial mit offener Porosität gebildet ist, zu schaffen, das eine möglichst einfache und kostensparende Fertigung der Brennkammer ermöglicht und in dessen Verlauf die gewünschten Materialeigenschaften des Brennkammermantels auf einfache Weise eingestellt werden können.

Das erfindungsgemäße Verfahren zur Herstellung einer Brennkammer umfaßt die folgenden Verfahrensschritte:
- Herstellen eines Innenmantel-Vorkörpers aus einem faserverstärkten Kunststoff;
- Pyrolysieren des Innenmantel-Vorkörpers, wobei der Innenmantel-Vorkörper nach einem ersten Pyrolysieren mit einem Precursor-Material infiltriert und anschließend erneut pyrolysiert wird;
- Aufbringen eines Außenmantel-Vorkörpers aus faserverstärktem Kunststoff auf den pyrolysierten Innenmantel-Vorkörper;
- Pyrolysieren des aus dem Außenmantel-Vorkörper und dem Innenmantel-Vorkörper gebildeten Bauteils; und
- Zuführen von Silizium zu dem pyrolysierten Außenmantel-Vorkörper zur Bildung einer Siliziumcarbid-Matrix im Material des Außenmantels.

Das erfindungsgemäße Verfahren bietet den Vorteil, daß der Brennkammermantel als integrale Struktur aus einem ein Faserkeramikmaterial umfassenden Innenmantel und aus einem ein faserverstärktes Siliziumcarbid umfassenden Außenmantel gebildet wird, ohne daß nachträgliche Fügeschritte zum Zusammenfügen von Einzelkomponenten erforderlich sind.

Dadurch, daß die an dem Innenmantel-Vorkörper ausgeführten Verfahrensschritte an dem Außenmantel-Vorkörper wiederholt werden, wird die Anzahl der zur Durchführung des Herstellungsverfahrens benötigten Vorrichtungen gering gehalten.

Insbesondere kann das Silizium dem pyrolysierten Außenmantel-Vorkörper unter Verwendung eines Flüssigsilizierverfahrens zugeführt werden, welches, im Gegensatz zu bekannten Silanverfahren, zur Silizierung beliebig dicker Außenmantel-Vorkörper besonders gut geeignet ist.

Grundsätzlich können Faserkeramiken, wie z.B. C/SiC, aber auch durch Verfahren wie die "Liquid Polymer Infiltration" (LPI) oder die "Chemical Vapour Infiltration" (CVI) hergestellt werden.

Soll der Einspritzkopf einstückig mit dem Innenmantel und/oder dem Außenmantel ausgebildet werden, so sind der Innenmantel-Vorkörper und/oder der Außenmantel-Vorkörper so auszugestalten, daß sie einen Einspritzkopf-Vorkörper umfassen.

Bei dem ersten Pyrolysieren des Innenmantel-Vorkörpers entsteht ein poröses Material, das in eine Kohlenstoff-Matrix eingebettete Fasern enthält. Der Porositätsgrad dieses Materials beträgt typischerweise ungefähr 20 %.

Ein niedrigerer Porositätsgrad, wie er für Zwecke der Transpirationskühlung in der Regel erforderlich ist, läßt sich dadurch erreichen, daß der Innenmantel-Vorkörper nach dem ersten Pyrolysieren mit einem Precursor-Material infiltriert und anschließend erneut pyrolysiert wird.

Dieser Vorgang der Reinfiltration mit einem Precursor-Material und anschließender erneuter Pyrolyse wird vorteilhafterweise wiederholt, bis ein vorgegebener Porositätsgrad des Materials des Innenmantel-Vorkörpers erreicht ist.

Wird ein höherer Porositätsgrad gewünscht, so kann beim Herstellen des Innenmantel-Vorkörpers aus dem faserverstärkten Kunststoff dem Material des Innenmantel-Vorkörpers ein Zusatzstoff zugegeben werden, welcher beim Pyrolysieren ausgast, so daß ein vorgegebener Porositätsgrad des Innenmantel-Vorkörpers erreicht wird.

Entscheidend für die Mikrostruktur des durch Pyrolyse aus dem faserverstärkten Kunststoff erhaltenen Materials ist die Stärke der Bindung zwischen den Fasern und dem Kunststoffmaterial, in welches die Fasern eingebettet sind.

Die Stärke der Faser-Matrix-Bindung kann durch eine Vorbehandlung des zum Herstellen des Innenmantel-Vorkörpers aus dem faserverstärkten Kunststoff verwendeten Fasergerüstes vor dem Herstellen des Innenmantel-Vorkörpers beeinflußt werden.

Als geeignete Vorbehandlungen kommen eine Beschichtung des Fasergerüstes oder eine thermische Vorbehandlung, insbesondere eine Erwärmung des Fasergerüstes, in Betracht.

Auch die Mikrostruktur des Materials des Außenmantels kann durch eine geeignete Vorbehandlung des zum Aufbringen des Außenmantel-Vorkörpers aus dem faserverstärkten Kunststoff verwendeten Fasergerüstes vor dem Aufbringen des Außenmantel-Vorkörpers beeinflußt werden.

So kann vorgesehen sein, daß das zum Aufbringen des Außenmantel-Vorkörpers aus dem faserverstärkten Kunststoff verwendete Fasergerüst vor dem Aufbringen des Außenmantel-Vorkörpers erwärmt wird.

Insbesondere bei Verwendung eines Kohlefasergerüsts wird bei der thermischen Vorbehandlung das Fasergerüst vorzugsweise auf eine Temperatur im Bereich von 600°C bis 900°C erwärmt. Ohne thermische Vorbehandlung entsteht bei der Pyrolyse eines kohlefaserverstärkten Kunststoffs ein kohlefaserverstärktes Kohlenstoff-Material (C/C-Material) mit einer Mikrostruktur, die eine Segmentierung in voneinander isolierte, in sich rißfreie C/C-Zellen aufweist. Durch eine thermische Behandlung in dem genannten Temperaturbereich nimmt die Faser-Matrix-Bindung so weit ab, daß bei der Pyrolyse ein C/C-Material mit einer Mikrostruktur entsteht, die immer noch eine Segmentierung in voneinander isolierte C/C-Zellen aufweist, wobei diese C/C-Zellen jedoch selbst von Mikrorissen durchsetzt sind, so daß das C/C-Material eine erhöhte Porosität aufweist.

Wird hingegen das Fasergerüst auf eine Temperatur von mehr als 900°C erwärmt, so nimmt die Faser-Matrix-Bindung so stark ab, daß sich die Kohlefasern während der Pyrolyse von der schrumpfenden Matrix lösen und ein C/C-Material entsteht, das keine Segmentierung in einzelne C/C-Zellen aufweist, sondern im wesentlichen homogen von Mikrorissen der Kohlenstoffmatrix durchzogen ist.

Die Kühlmittelkanäle der Brennkammer können an der Innenseite des Außenmantels ausgebildet werden, indem vor dem Aufbringen des Außenmantel-Vorkörpers die gewünschte Form der Kühlmittelkanäle aufweisende Verlustmassenkörper auf den pyrolysierten Innenmantel-Vorkörper aufgebracht werden.

Die Entfernung der Verlustmassenkörper gestaltet sich besonders einfach, wenn die Verlustmassenkörper aus einem solchen Material bestehen, daß sie beim Pyrolisieren des aus dem Außenmantel-Vorkörper und dem Innenmantel-Vorkörper gebildeten Bauteils thermisch zerstört werden.

Die Verlustmassenkörper können aber auch erst nach dem Zuführen von Silizium zu dem pyrolysierten Außenmantel-Vorkörper wieder entfernt werden.

Soll der fertige Innenmantel zumindest teilweise ein Material mit einer offenen Porosität umfassen, so werden vorteilhafterweise die an den Außenmantel-Vorkörper grenzenden Außenseiten der Verlustmassenkörper, beispielsweise durch Auftragen eines Trennmittels oder eines keramischen Schlickers, versiegelt, um ein Eindringen von Silizium beim Silizieren des Außenmantel-Vorkörpers in den Innenmantel zu verhindern.

Alternativ oder ergänzend dazu ist es möglich, vor dem Aufbringen des Außenmantel-Vorkörpers Kühlmittelkanäle an der Außenseite des Innenmantel-Vorkörpers auszubilden. Dies kann durch mechanische Bearbeitung des Innenmantel-Vorkörpers, beispielsweise durch Fräsen, erfolgen.

Wenn der fertige Innenmantel ein Material mit einer offenen Porosität umfassen, also nicht vollständig siliziert werden soll, werden an die Kühlmittelkanäle grenzende Bereiche der Außenseite des Innenmantel-Vorkörpers mit einem Trennmittel versehen, um ein Eindringen des dem Außenmantel-Vorkörper zugeführten Siliziums in den Innenmantel-Vorkörper zu verhindern.

Vorteilhafterweise wird das Trennmittel nach dem Zuführen von Silizium zu dem pyrolysierten Außenmantel-Vorkörper durch Spülen der Kühlmittelkanäle mit einem das Trennmittel lösenden Stoff entfernt.

Alternativ oder ergänzend zu dem Auftragen eines Trennmittels können die Kühlmittelkanäle vor dem Aufbringen des Außenmantel-Vorkörpers mit einem aushärtbaren Material gefüllt werden, um ein Eindringen des Siliziums in den Innenmantel beim Silizieren des Außenmantel-Vorkörpers zu verhindern.

Vorteilhafterweise wird das aushärtbare Material nach dem Zuführen von Silizium zu dem pyrolysierten Außenmantel-Vorkörper chemisch und/oder mechanisch entfernt.

Ferner werden, wenn der fertige Innenmantel zumindest teilweise ein Material mit einer offenen Porosität umfassen soll, an den Außenmantel grenzende Kontaktbereiche der Außenseite des Innenmantel-Vorkörpers vor dem Aufbringen des Außenmantel-Vorkörpers versiegelt, um ein Eindringen von Silizium beim Silizieren des Außenmantel-Vorkörpers in den Innenmantel zu verhindern.

Die Versiegelung der Kontaktbereiche erfolgt beispielsweise mittels eines Plasmabeschichtungsprozesses, durch Auftragen eines keramischen Schlickers auf die Kontaktbereiche oder durch andere geeignete Verfahren.

Wird gewünscht, daß ein Bereich des Innenmantels keine Porosität aufweist, so wird dem entsprechenden Bereich des Innenmantel-Vorkörpers Silizium zur Bildung einer Siliziumcarbid-Matrix im Material des Innenmantels zugeführt.

Ferner kann vorgesehen sein, daß der Bereich des Innenmantels, dem das Silizium zugeführt worden ist, auf seiner Innenseite mit einer Beschichtung aus einem TBC-Material versehen wird, um die Temperatur, der das silizierte Material des Innenmantels im Betrieb der Brennkammer ausgesetzt ist, zu verringern.

Um eine Brennkammer mit einem Innenmantel herzustellen, der einen ersten Teil aufweist, welches ein Material mit einer offenen Porosität umfaßt, und einen weiteren Teil aufweist, dessen Material nicht porös ist, wird ein erster Teil des Innenmantel-Vorkörpers aus einem faserverstärkten Kunststoff hergestellt und dieser erste Teil des Innenmantel-Vorkörpers pyrolysiert. Anschließend werden Kontaktbereiche der Außenseite des ersten Teils des Innenmantel-Vorkörpers versiegelt, um bei einer späteren Silizierung des weiteren Teils des Innenmantel-Vorkörpers sowie des Außenmantel-Vorkörpers ein Eindringen des Siliziums in den ersten Teil des Innenmantel-Vorkörpers zu verhindern. Darauf wird ein weiterer Teil des Innenmantel-Vorkörpers, der an mindestens einem der Kontaktbereiche an den ersten Teil des Innenmantel-Vorkörpers angrenzt, aus einem faserverstärkten Kunststoff hergestellt und pyrolysiert. Schließlich wird auf den gesamten pyrolysierten Innenmantel-Vorkörper der Außenmantel-Vorkörper aus faserverstärktem Kunststoff aufgebracht, und der Außenmantel-Vorkörper wird pyrolysiert und siliziert, wie vorstehend beschrieben.

Alternativ dazu kann eine in Längsrichtung gradierte Porosität auch durch partielles Nachinfiltrieren und erneutes Pyrolysieren des Innenmantel-Vorkörpers nach dem ersten Pyrolysierschritt erreicht werden.

Weitere Merkmale und Vorteile der Erfindung sind Gegenstand der nachfolgenden Beschreibung und zeichnerischen Darstellung von Ausführungsbeispielen.

In der Zeichnung zeigen:
- Fig. 1: einen schematischen Längsschnitt durch eine erste Ausführungsform einer Brennkammer mit nicht-porösem Innenmantel und ausschließlicher Regenerativkühlung, wobei diese Brennkammer nicht unter die Patentansprüche fällt;
- Fig. 2: einen schematischen Querschnitt längs der Linie 2-2 in Fig. 1;
- Fig. 3: einen schematischen Querschnitt durch einen kohlefaserverstärkten Kunststoff;
- Fig. 4: einen schematischen Querschnitt durch ein C/C-Material;
- Fig. 5: einen schematischen Querschnitt durch ein C/C-SiC-Material;
- Fig. 6: einen schematischen Längsschnitt durch eine zweite Ausführungsform einer Brennkammer mit porösem Innenmantel und ausschließlicher Transpirationskühlung;
- Fig. 7: einen schematischen Querschnitt längs der Linie 7-7 in Fig. 6;
- Fig. 8: einen schematischen Längsschnitt durch eine dritte Ausführungsform einer Brennkammer, die einen transpirativ gekühlten Abschnitt mit porösem Innenmantel und einen filmgekühlten Abschnitt mit einem nicht-porösen, mit einer TBC-Beschichtung versehenen Innenmantel aufweist;
- Fig. 9: einen schematischen Querschnitt längs der Linie 9-9 in Fig. 8;
- Fig. 10: einen schematischen Querschnitt längs der Linie 10-10 in Fig. 8;
- Fig. 11: einen schematischen Querschnitt durch eine vierte Ausführungsform einer Brennkammer, die einen filmgekühlten Abschnitt aufweist; und
- Fig. 12: einen Ausschnitt aus einem schematischen Längsschnitt durch die vierte Ausführungsform einer Brennkammer längs der Linie 12-12 in Fig. 11.

Gleiche oder funktional äquivalente Elemente sind in allen Figuren mit denselben Bezugszeichen bezeichnet.

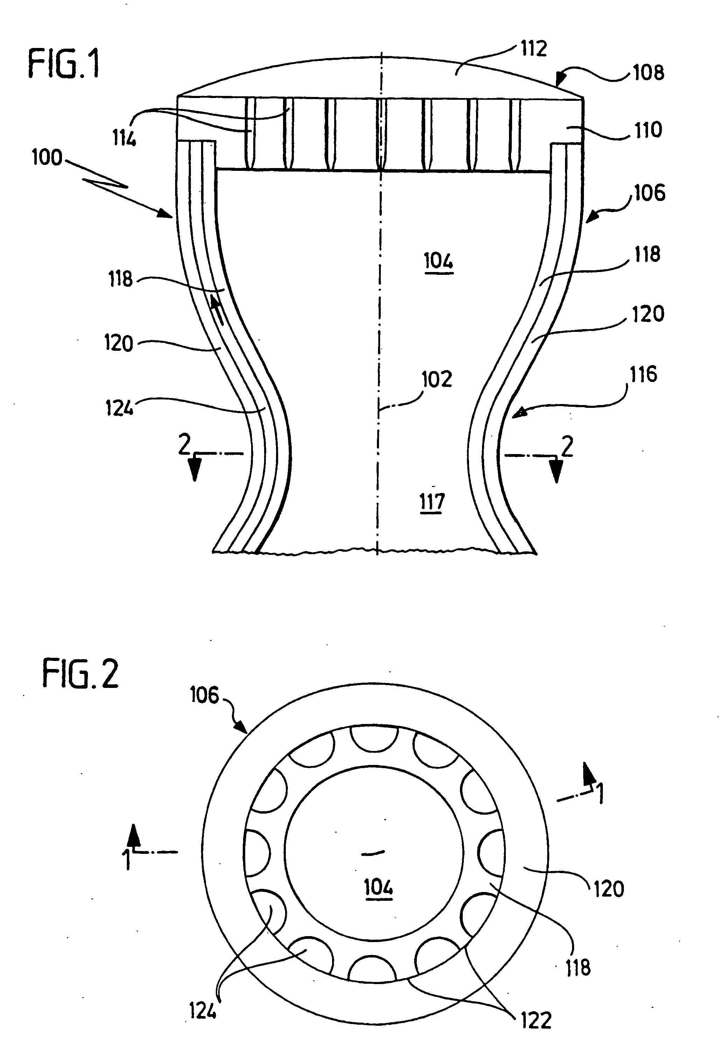

Eine in den Fig. 1 und 2 dargestellte, als Ganzes mit 100 bezeichnete erste Ausführungsform einer Brennkammer, welche nicht unter die Patentansprüche fällt, umfaßt einen bezüglich einer Längsachse 102 der Brennkammer 100 im wesentlichen rotationssymmetrischen Brennraum 104, der seitlich von einem Brennkammermantel 106 umschlossen ist.

Ein (in der Darstellung der Fig. 1 oberes) Ende des Brennraums 104 ist durch einen Einspritzkopf 108 verschlossen, welcher auf einem oberen Rand des Brennkammermantels 106 angeordnet ist.

Der Einspritzkopf 108 umfaßt eine im wesentlichen zylindrische, koaxial zu der Längsachse 102 der Brennkammer 100 angeordnete Einspritzdüsenplatte 110 sowie eine auf der dem Brennraum 104 abgewandten Seite der Einspritzdüsenplatte 110 angeordnete Oxidationsmittelkammer 112, welcher über eine (nicht dargestellte) Zuleitung aus einem Oxidationsmitteltank ein unter Druck stehendes Oxidationsmittel, beispielsweise flüssiger Sauerstoff, zuführbar ist.

Die Einspritzdüsenplatte 110 wird von mehreren Einspritzdüsen 114 für das Oxidationsmittel durchsetzt, die beispielsweise parallel zu der Längsachse 102 der Brennkammer 100 ausgerichtet sind und die Oxidationsmittelkammer 112 mit dem Brennraum 104 verbinden, so daß das unter Druck stehende Oxidationsmittel aus der Oxidationsmittelkammer 112 durch die Einspritzdüsen 114 in den Brennraum 104 der Brennkammer 100 eingespritzt werden kann.

Ferner ist die Einspritzdüsenplatte 110 mit (aus Gründen der Übersichtlichkeit nicht dargestellten) Einspritzdüsen für ein Reduktionsmittel versehen, die einerseits mit einem Reservoir unter Druck stehenden Reduktionsmittels, beispielsweise flüssigen Wasserstoffs, und andererseits mit dem Brennraum 104 in Verbindung stehen, so daß durch diese Einspritzdüsen das Reduktionsmittel in den Brennraum 104 der Brennkammer 100 eingespritzt werden kann, um dort mit dem Oxidationsmittel unter Wärmeentwicklung zu reagieren.

Der den Brennraum 104 seitlich umschließende Brennkammermantel 106 ist so geformt, daß die im wesentlichen kreisförmige Querschnittsfläche des Brennraums 104 mit wachsendem Abstand von dem Einspritzkopf 108 abnimmt, bis sie im Bereich eines Düsenhalses 116 ein Minimum erreicht. Auf der dem Einspritzkopf 108 abgewandten Seite des Düsenhalses 116 steigt die Querschnittsfläche des Brennraums 104 wieder an. In diesem Bereich geht der Brennraum 104 in einen Düsenbereich 117 über.

Der Brennkammermantel 106 umfaßt, wie am besten aus der Darstellung der Fig. 2 zu ersehen ist, einen Innenmantel 118, dessen Innenseite den Brennraum 104 der Brennkammer 100 begrenzt, und einen Außenmantel 120, dessen Außenseite eine Außenseite der Brennkammer 100 bildet.

Es kann vorgesehen sein, daß der Innenmantel 118 und/oder der Außenmantel 120 einstückig mit dem Einspritzkopf 108 ausgebildet sind.

Der Innenmantel 118 und der Außenmantel 120 des Brennkammermantels 106 grenzen an Kontaktflächen 122 aneinander, die in Umfangsrichtung der Brennkammer 100 voneinander beabstandet sind und sich in Längsrichtung der Brennkammer 100 erstrecken.

Zwischen jeweils zwei einander benachbarten Kontaktflächen 122 ist jeweils ein Kühlmittelkanal 124 angeordnet. Jeder der Kühlmittelkanäle 124 ist als eine Ausnehmung an der Außenseite des Innenmantels 118 ausgebildet, welche sich im wesentlichen in Längsrichtung der Brennkammer 100 erstreckt und einen im wesentlichen halbkreisförmigen Querschnitt aufweist.

Alternativ oder ergänzend dazu können die Kühlmittelkanäle auch als Ausnehmungen an der Innenseite des Außenmantels 120 ausgebildet sein.

Außer einem halbkreisförmigen Querschnitt können die Kühlmittelkanäle 124 auch einen anderen Querschnitt, beispielsweise einen dreieckigen, rechteckigen oder trapezförmigen Querschnitt, aufweisen. Ferner kann die Querschnittsform und -fläche in Längsrichtung der Brennkammer 100 entsprechend den lokalen Kühlerfordernissen variieren.

Jeder der Kühlmittelkanäle 124 ist an einem dem Einspritzkopf 108 abgewandten Ende mit einer (nicht dargestellten) Kühlmittelzuführleitung und an seinem dem Einspritzkopf 108 zugewandten Ende mit einer (nicht dargestellten) Kühlmittelabführleitung verbunden und von einem gasförmigen oder flüssigen Kühlmittel, beispielsweise von gasförmigem oder flüssigem Wasserstoff oder von entionisiertem Wasser, durchströmbar.

Wird als Kühlmittel derselbe Stoff verwendet, der als Reduktionsmittel zusammen mit dem Oxidationsmittel in den Brennraum 104 eingespritzt wird, beispielsweise gasförmiger oder flüssiger Wasserstoff, so kann vorgesehen sein, daß der Kühlmittelabführkanal mit den in der Einspritzdüsenplatte 110 vorgesehenen Einspritzdüsen für das Reduktionsmittel verbunden ist, so daß das Kühlmittel nach Durchströmen der Kühlmittelkanäle 124 durch den Einspritzkopf 108 in den Brennraum 104 gelangt, um dort verbrannt zu werden.

Der Innenmantel 118 besteht bei der ersten Ausführungsform der Brennkammer 100 aus einem C/C-SiC-Material, das heißt aus kohlefaserverstärktem Kohlenstoff, der in eine Siliziumcarbid-Matrix eingebettet ist. Die Morphologie und die Herstellung des C/C-SiC-Materials werden im folgenden noch näher erläutert werden.

C/C-SiC ist ein Verbundwerkstoff aus der Werkstoffklasse der Faserkeramiken (CMC für "Ceramic Matrix Composites") und zeichnet sich durch Beständigkeit bei extrem hohen Temperaturen von bis zu 1800°C im Dauerbetrieb, bis zu 2700°C im Kurzzeitbetrieb, aus. Es handelt sich um einen Leichtbauwerkstoff mit einer Dichte von ungefähr 2 g/cm³, aus dem komplex geformte, dünnwandige, schalenartige Strukturen ebenso gefertigt werden können wie dickwandige Bauteile. C/C-SiC weist eine äußerst geringe Thermoschockempfindlichkeit und einen sehr kleinen thermischen Ausdehnungskoeffizienten α im Bereich von 10⁻⁶ bis 4 x 10⁻⁶ auf.

Aufgrund dieser Eigenschaften ist der Innenmantel 118 aus C/C-SiC besonders geeignet, dem hohen Wärmefluß aus dem Brennraum 104 während des Verbrennungsvorganges zu widerstehen und die aus dem Brennraum 104 zugeführte Wärme an das Kühlmittel in den Kühlmittelkanälen 124 weiterzuleiten, von welchem die Wärme aus dem Brennkammermantel 106 abtransportiert wird. Diese Methode der Kühlung, bei der das Kühlmittel nicht in direkten Kontakt mit den Verbrennungsgasen in dem Brennraum 104 kommt, wird als Regenerativkühlung bezeichnet.

Der Außenmantel 120 dient der Aufnahme der beträchtlichen Zugspannungen, die infolge des während der Verbrennung hohen Brennrauminnendrucks von bis zu 230 bar entstehen.

Bei der ersten Ausführungsform der Brennkammer 100 besteht auch der Außenmantel 120 aus einem C/C-SiC-Material, das aufgrund seines Gehalts an Kohlefasern eine hohe Zugfestigkeit aufweist.

Zur Herstellung des vorstehend beschriebenen Brennkammermantels 106 der ersten Ausführungsform einer Brennkammer 100 wird wie folgt vorgegangen:
Zunächst wird aus einem Kohlenstoffaser-Gerüst und einem Precursor-Polymer, das nach einer Pyrolyse einen hohen Restkohlenstoffgehalt aufweist, ein Innenmantel-Vorkörper aus einem kohlenfaserverstärkten Kunststoff (CFK), ein sogenannter "Grünkörper", hergestellt. Bei der Herstellung dieses Vorkörpers können das bekannte Harzinjektionsverfahren oder das bekannte Autoklawerfahren zum Einsatz kommen.

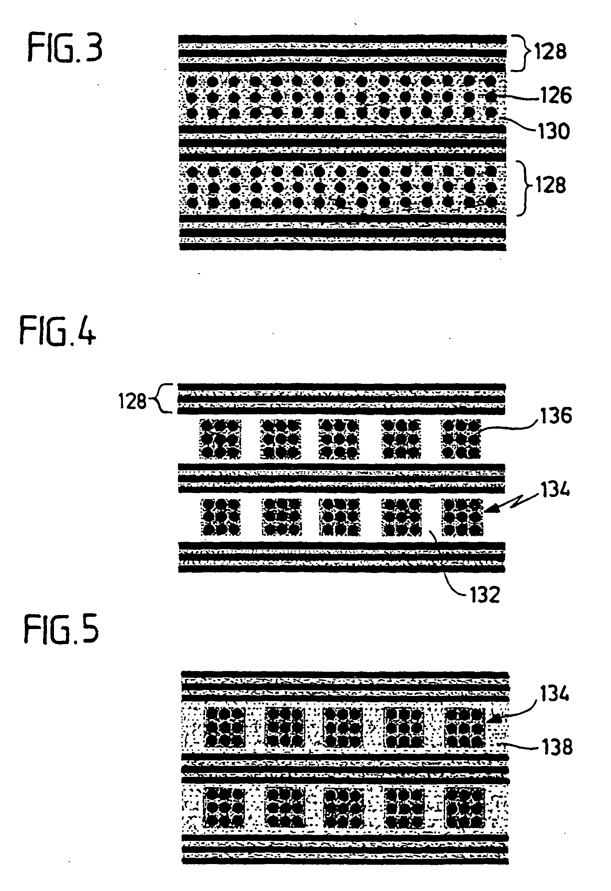

Fig. 3 zeigt schematisch den Aufbau des kohlefaserverstärkten Kunststoffmaterials des Innenmantel-Vorkörpers. Das Kohlefasergerüst besteht aus aufeinanderfolgenden Kohlefaserlagen 128 aus einzelnen Kohlefaser-Filamenten 126 mit einem Durchmesser von typischerweise 7 µm, wobei vorzugsweise textile Gewebelagen mit bidirektionaler Webart in gleicher Orientierung oder mit quer zueinander verlaufender Orientierung verwendet werden. Alternativ dazu kann das Fasergerüst auch unter Verwendung dreidimensionaler Web- und/oder Flechttechniken aufgebaut werden. In Abhängigkeit von dem eingesetzten Keramikprozeß kann ggf. auch ein Wickelverfahren verwendet werden. Die Kohlefaser-Filamente 126 sind in eine Matrix 130 aus dem Precursor-Polymer eingebettet.

Nach dem vollständigen Aushärten des Precursor-Polymers 130, das bei einer erhöhten Temperatur von beispielsweise 200°C erfolgen kann, wird der Innenmantel-Vorkörper in einer Schutzgasatmosphäre, beispielsweise einer Stickstoffatmosphäre, bei einer Temperatur von 800°C bis 900°C pyrolysiert. Bei der Pyrolyse zersetzt sich die Precursor-Matrix in der Weise, daß nur ein Kohlenstoffrest zurückbleibt.

Die Zersetzung der Precursor-Matrix ist mit einer Volumenabnahme verbunden. Aufgrund der Bindung zwischen den Kohlefasern und der Matrix kann die Matrix jedoch nicht homogen und isotrop schrumpfen; vielmehr führt die Schrumpfbehinderung aufgrund der Faser-Matrix-Bindung, wie in Fig. 4 dargestellt, zur Ausbildung von Mikrorissen 132, zwischen denen voneinander isolierte Zellen 134 aus in einer Kohlenstoffmatrix 136 eingebetteten Bündeln von Kohlefaser-Filamenten 126 ausgebildet sind.

Dadurch entsteht ein C/C-Material (kohlefaserverstärkter Kohlenstoff) mit einer offenen Porosität von typischerweise ungefähr 20 %; das heißt, die Mikrorisse 132 bilden ein zusammenhängendes System von Hohlräumen, die zusammen ungefähr 20 % des gesamten Volumens des C/C-Materials einnehmen. Die Ausdehnung des C/C-Materials senkrecht zu den Faserlagen 128 geht während der Pyrolyse typischerweise um einen Faktor 0,91 zurück.

Die Struktur des bei der Pyrolyse entstehenden Mikrorißmusters hängt wesentlich von der Stärke der Faser-Matrix-Bindung ab. Durch eine geeignete Vorbehandlung des verwendeten Kohlefasergerüsts, beispielsweise durch Beschichten der Fasern oder durch eine thermische Vorbehandlung, kann die Stärke der Faser-Matrix-Bindung in dem Fasergerüst insgesamt oder, wenn dies gewünscht wird, nur lokal beeinflußt werden.

Ohne thermische Vorbehandlung des Fasergerüsts, das heißt, bei maximaler Stärke der Faser-Matrix-Bindung, entsteht typischerweise eine Mikrostruktur wie die in Fig. 4 dargestellte, die im wesentlichen rißfreie Zellen 134 aus typischerweise 300 bis 500 einzelnen Kohlefaser-Filamenten 126 aufweist, die in eine dichte Kohlenstoffmatrix 136 eingebettet sind.

Wird das Kohlefasergerüst vor der Herstellung des Innenmantel-Vorkörpers bei Temperaturen bis zu 900°C thermisch vorbehandelt, nimmt die Faser-Matrix-Bindung ab, so daß bei der Pyrolyse ein C/C-Material mit einer Mikrostruktur entsteht, die immer noch eine Segmentierung in voneinander isolierte C/C-Zellen aufweist, wobei diese C/C-Zellen jedoch selbst von Mikrorissen durchsetzt sind.

Wird das Kohlefasergerüst vor dem Herstellen des Innenmantel-Vorkörpers bei einer Temperatur von mehr als 900°C thermisch vorbehandelt, so nimmt die Faser-Matrix-Bindung so stark ab, daß sich die Kohlefasern während der Pyrolyse von der schrumpfenden Matrix lösen und ihren ursprünglichen Abstand voneinander beibehalten. In diesem Fall entsteht ein C/C-Material, das keine Segmentierung in einzelne C/C-Zellen aufweist, sondern im wesentlichen homogen von Mikrorissen der Kohlenstoffmatrix durchzogen ist.

Durch eine geeignete, beispielsweise thermische, Vorbehandlung des Kohlefasergerüsts ist es somit möglich, die Porosität des bei der Pyrolyse entstehenden C/C-Materials hinsichtlich ihres Volumenanteils und hinsichtlich der mikroskopischen Verteilung der Hohlräume gezielt einzustellen. Insbesondere ist es dadurch möglich, den Volumenanteil und die Struktur der Porosität des Materials des Innenmantel-Vorkörpers in Längsrichtung des Innenmantel-Vorkörpers oder in einer radialen Richtung des Innenmantel-Vorkörpers gezielt zu variieren.

Wie bereits erwähnt, beträgt die Porosität des nach der ersten Pyrolyse entstehenden C/C-Materials typischerweise ungefähr 20 %. Wird ein niedrigerer Porositätsgrad gewünscht, so wird der Innenmantel-Vorkörper nach der ersten Pyrolyse mit dem Precursor-Polymer infiltriert und anschließend erneut pyrolysiert. Durch den Vorgang der Reinfiltration und erneuten Pyrolyse nimmt die Porosität des erhaltenen C/C-Materials ab. Somit kann ein vorgegebener Porositätsgrad dadurch erreicht werden, daß der Innenmantel-Vorkörper wiederholt mit dem Precursor-Polymer infiltriert und anschließend pyrolysiert wird, bis der vorgegebene Porositätsgrad des Materials des Innenmantel-Vorkörpers erreicht ist.

Weist der Innenmantel-Vorkörper nach ein- oder mehrfacher Pyrolyse den gewünschten Porositätsgrad auf, so werden an dessen Außenseite die Kühlmittelkanäle 124 durch mechanische Bearbeitung, beispielsweise durch Fräsen, ausgebildet. Dabei können die Kühlmittelkanal-Querschnitte in Längsrichtung des Innenmantel-Vorkörpers in Abhängigkeit von dem lokal aufzunehmenden Wärmefluß variiert werden.

In einem nächsten Schritt wird auf dem pyrolysierten Innenmantel-Vorkörper ein Außenmantel-Vorkörper aus einem kohlefaserverstärkten Kunststoff gebildet.

Dies kann beispielsweise dadurch geschehen, daß ein Kohlefasergelege auf den Innenmantel-Vorkörper aufgelegt und anschließend ein Precursor-Polymer in das Fasergelege injiziert wird. Das kohlefaserverstärkte Kunststoffmaterial des Außenmantel-Vorkörpers weist die in Fig. 3 dargestellte und vorstehend bereits beschriebene Struktur auf.

Anschließend wird das aus dem Außenmantel-Vorkörper und aus dem Innenmantel-Vorkörper gebildete Bauteil als Ganzes in einer Schutzgasatmosphäre, beispielsweise in einer Stickstoffatmosphäre, bei einer Temperatur im Bereich von 800°C bis 900°C pyrolysiert, so daß auch aus dem Material des Außenmantel-Vorkörpers ein C/C-Material entsteht, dessen Struktur in Fig. 4 dargestellt ist und vorstehend bereits erläutert wurde.

Der Porositätsgrad und die Struktur der Porosität des porösen C/C-Materials des Außenmantel-Vorkörpers lassen sich in der bereits im Zusammenhang mit der Herstellung des Innenmantel-Vorkörpers beschriebenen Weise, das heißt durch geeignete Vorbehandlung des Fasergerüsts vor der Bildung des Außenmantel-Vorkörpers und/oder durch wiederholte Infiltration des Außenmantel-Vorkörpers mit dem Precursor-Polymer und anschließender erneuter Pyrolyse, einstellen.

Schließlich wird dem aus dem Außenmantel-Vorkörper und dem Innenmantel-Vorkörper gebildeten Bauteil aus porösem C/C-Material Silizium zugeführt, um einen Innenmantel 118 und einen Außenmantel 120 der Brennkammer 100 aus einem dichten, porenfreien C/C-SiC-Material zu schaffen.

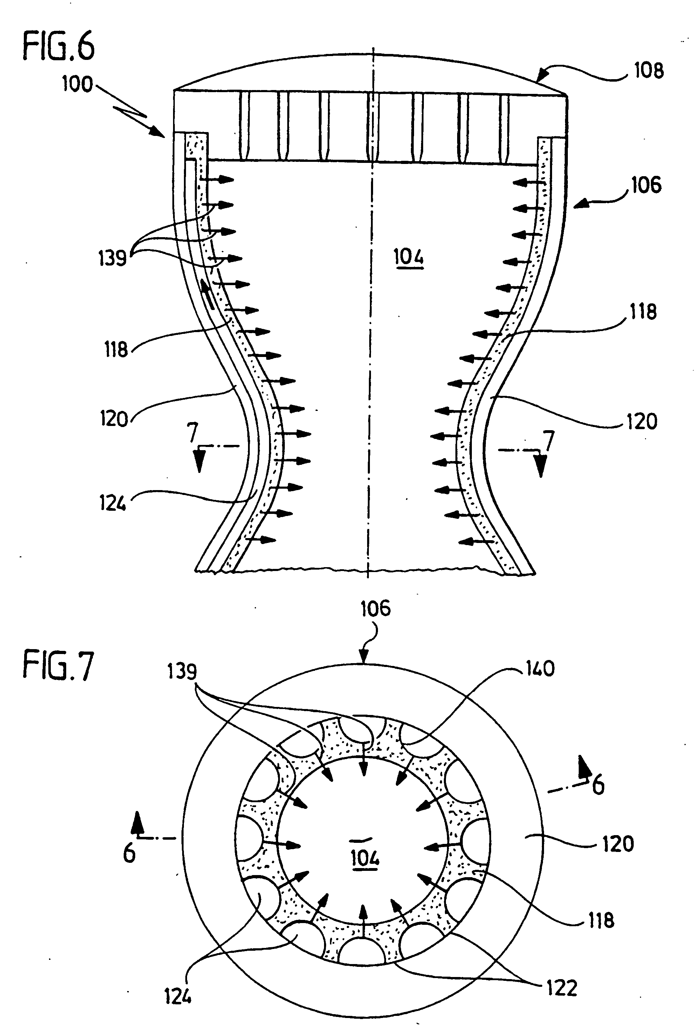

Die Zuführung von Silizium zu dem Bauteil erfolgt vorzugsweise durch ein Flüssig-Silizierverfahren. Dabei wird das Bauteil unter Vakuum bei einer Temperatur von ungefähr 1600°C mit flüssigem Silizium infiltriert. Das flüssige Silizium dringt aufgrund der Kapillarwirkung in die Poren des porösen C/C-Materials des Innenmantel-Vorkörpers und des Außenmantel-Vorkörpers ein und reagiert an den Benetzungsstellen sowohl mit dem Matrix-Restkohlenstoff als auch mit einzelnen Kohlefasern-Filamenten zu einer keramischen Siliziumcarbid-Matrix 138, in die die C/C-Zellen oder C/C-Stränge 134 eingebettet sind, wie aus Fig. 5 zu ersehen ist.

Somit schließt die Siliziumcarbid-Matrix die Poren in dem C/C-Material und bildet eine vor Oxidation schützende Ummantelung der C/C-Zellen.

Damit ist die Herstellung des Innenmantels 118 und des Außenmantels 120 der ersten Ausführungsform der Brennkammer 100 abgeschlossen.

Um die Wärmeabstrahlung an der Außenseite der Brennkammer 100 zu minimieren, kann an der Außenseite des Außenmantels 120 eine äußere Hochtemperatur-Isolationsschicht angebracht werden. Das Anbringen einer solchen wärmeisolierenden Schicht kann durch die Einbauverhältnisse der Brennkammer 100 erforderlich werden, um in der Nachbarschaft der Brennkammer 100 angeordnete Bauteile vor einer zu großen thermischen Beanspruchung zu schützen.

Ferner kann die Innenseite des Innenmantels 118 der Brennkammer 100 ganz oder teilweise mit einer Beschichtung aus einem TBC-Material versehen werden. Diese Beschichtung kann beispielsweise durch ein Spritzverfahren auf die Innenseite des Innenmantels 118 aufgebracht werden.

Eine in den Fg. 6 und 7 dargestellte zweite Ausführungsform einer Brennkammer 100, die für noch höhere Brennraumtemperaturen und -drücke geeignet ist, unterscheidet sich von der vorstehend beschriebenen ersten Ausführungsform dadurch, daß der Innenmantel 118 der Brennkammer 100 aus einem C/C-Material mit offener Porosität gebildet ist.

Aufgrund der Porosität des Innenmantels 118 wird im Betrieb der Brennkammer 100 ein Teil des die Kühlmittelkanäle 124 durchströmenden Kühlmittels durch den Innenmantel 118 in den Brennraum 104 gepreßt, wo es längs der Innenseite des Innenmantels 118 einen kühlenden Grenzschichtfilm ausbildet, die den Innenmantel 118 vor den heißen Verbrennungsprodukten abschirmt und den konvektiven Wärmeübergang aus dem Brennraum 104 in den Innenmantel 118 deutlich verringert. Die Strömung des Kühlmittels durch den porösen Innenmantel 118 in den Brennraum 104 ist in den Fig. 6 und 7 durch Pfeile 139 dargestellt.

Ein solches Kühlverfahren, bei dem das Kühlmittel dem Brennraum 104 über eine Vielzahl von Öffnungen, die über eine innere Begrenzungsfläche des Brennraums 104 verteilt sind, zugeführt wird, um einen kühlenden Grenzschichtfilm auszubilden, wird, wie eingangs bereits ausgeführt, als Transpirationskühlung bezeichnet.

Das bei der Transpirationskühlung zugeführte Kühlmittel kann flüssig oder gasförmig sein. Bei Zuführung eines flüssigen Kühlmittels in den Brennraum 104 wird ein zusätzlicher Kühleffekt dadurch erzielt, daß das zugeführte Kühlmittel in dem ausgebildeten Grenzschichtfilm verdampft und hierbei latente Wärme aufnimmt.

Damit das Kühlmittel aus den Kühlmittelkanälen 124 durch den porösen Innenmantel 118 in den Brennraum 104 gelangen kann, muß der Druck des Kühlmittels in den Kühlmittelkanälen 124 höher sein als der im Brennraum 104 herrschende Druck. Bei einem Brennraumdruck in der Größenordnung von 200 bar ist typischerweise ein um 20 bis 40 bar höherer Kühlmitteldruck in den Kühlmittelkanälen 124 anzuwenden.

Neben seiner Kühlwirkung bietet der bei der Transpirationskühlung ausgebildete Grenzschichtfilm den weiteren Vorteil, daß das in den Brennraum 104 injizierte Oxidationsmittel von dem Material des Innenmantels 118 ferngehalten wird, so daß für den Innenmantel 118 auch ein oxidationsempfindliches Material verwendet werden kann.

Ferner bietet die Porosität des Innenmantels 118 den Vorteil, daß Schwankungen des Brennraumdrucks während der Verbrennung gedämpft werden. Die Poren im Material des Innenmantels 118 dienen nämlich als Ausgleichsvolumen, und im porösen Material des Innenmantels 118 vorhandene, die Poren miteinander verbindende Mikrokanäle mit kleiner Querschnittsfläche wirken als Drossel für eine Fluidströmung in diese Poren, so daß bei einem Anstieg des Brennraumdrucks eine gedrosselte Fluidströmung in die Poren des Innenmantels 118 und bei einem Abfallen des Brennraumdrucks eine gedrosselte Fluidströmung aus den Poren des Innenmantels 118 heraus in den Brennraum 104 erfolgen kann. Durch dieses über eine Drossel zugängliche Ausgleichsvolumen werden die Schwankungen des Brennraumdrucks während der Verbrennung gedämpft und Druckspitzen, die zu einer Beschädigung der Brennkammer 100 führen könnten, abgefangen.

Zur Herstellung des Brennkammermantels 106 der zweiten Ausführungsform einer Brennkammer 100 wird wie folgt vorgegangen:
Zunächst wird ein Innenmantel-Vorkörper aus einem kohlefaserverstärkten Kunststoff hergestellt und, gegebenenfalls mehrfach, pyrolysiert, wie bereits im Zusammenhang mit der Herstellung der ersten Ausführungsform einer Brennkammer 100 beschrieben.

Anschließend werden an der Außenseite des pyrolysierten Innenmantel-Vorkörpers durch mechanische Bearbeitung Kühlmittelkanäle 124 ausgebildet.

Da jedoch bei der zweiten Ausführungsform der Brennkammer 100 der Innenmantel 118 als poröse C/C-Struktur erhalten bleiben soll, ist es erforderlich, die dem Außenmantel 120 zugewandte Außenseite des Innenmantel-Vorkörpers vor dem Aufbringen des

Außenmantel-Vorkörpers zu versiegeln, um ein Eindringen von Silizium in den Innenmantel 118 bei der Silizierung des Außenmantel-Vorkörpers zu verhindern.

Zu diesem Zweck können nach der Ausbildung der Kühlmittelkanäle 124 die innenmantelseitigen Kühlkanaloberflächen 140 mit einem Trennmittel, beispielsweise mit Bornitrid (BN), versehen werden.

Ferner werden die zwischen jeweils zwei Kühlmittelkanälen 124 angeordneten Kontaktflächen 122 mit einer dicht abschließenden, porenfreien Kontaktschicht versehen. Diese Kontaktschicht kann beispielsweise durch Auftragen eines keramischen Schlickers oder mittels eines Plasmabeschichtungsprozesses hergestellt werden.

Alternativ oder ergänzend zu der Versiegelung der innenmantelseitigen Kühlkanaloberflächen 140 mit einem Trennmittel können die Kühlmittelkanäle 124 auch mit einem pastösen, aushärtbaren Material ausgefüllt werden. Dieses Material muß eine ausreichende Temperaturbeständigkeit aufweisen, um die bei den nachfolgenden Verfahrensschritten der Pyrolyse und der Flüssigsilizierung auftretenden Temperaturen auszuhalten.

Nachdem der Innenmantel 118 auf die vorstehend beschriebene Weise versiegelt worden ist, wird in der bereits im Zusammenhang mit der Herstellung der ersten Ausführungsform der Brennkammer 100 beschriebenen Weise ein Außenmantel-Vorkörper aus kohlefaserverstärktem Kunststoff auf dem pyrolysierten Innenmantel-Vorkörper aufgebracht und pyrolysiert.

Anschließend wird der pyrolysierte Außenmantel-Vorkörper flüssigsiliziert, indem unter Vakuum bei einer Temperatur von ungefähr 1600°C der Außenmantel-Vorkörper von seiner Außenseite und/oder seiner Stirnseite her mit flüssigem Silizium infiltriert wird. Das flüssige Silizium dringt aufgrund der Kapillarwirkung in die Poren des C/C-Materials des Außenmantel-Vorkörpers ein, kann jedoch die versiegelte Kontaktschicht an den Kontaktflächen 122 des Innenmantels 118 sowie das an den innenmantelseitigen Kühlkanaloberflächen 140 angeordnete Trennmittel nicht überwinden, so daß kein flüssiges Silizium in den Innenmantel 118 gelangt.

Infolgedessen wird bei der Flüssigsilizierung ein dichter, porenfreier Außenmantel 120 aus einem C/C-SiC-Material gebildet, während das Material des Innenmantels 118 als C/C-Material mit offener Porosität erhalten bleibt.

Wie bei der ersten Ausführungsform der Brennkammer 100 kann auch der Außenmantel 120 der zweiten Ausführungsform nach der Flüssigsilizierung an seiner Außenseite mit einer äußeren Hochtemperaturisolationsschicht versehen werden, um die Wärmeabstrahlung von der Außenseite der Brennkammer 100 zu vermindern.

Schließlich wird noch das an den innenmantelseitigen Kühlkanaloberflächen 140 angeordnete Trennmittel dadurch entfernt, daß die Kühlmittelkanäle 124 mit einer geeigneten Säure oder Lauge oder einer anderen geeigneten Chemikalie, die das C/C-Material des Innenmantels 118 und das C/C-SiC-Material des Außenmantels 120 nicht oder allenfalls in geringem Umfang angreift, das Trennmittel jedoch auflöst, gespült werden. Zur Entfernung des Trennmittels Bornitrid kommt beispielsweise Flußsäure in Betracht.

Falls die Kühlmittelkanäle 124 vor dem Aufbringen des Außenmantel-Vorkörpers mit einem aushärtbaren Material gefüllt worden sind, ist auch dieses Material auf chemischem und/oder mechanischem wege nach der Silizierung des Außenmantels 120 wieder zu entfernen.

Im übrigen stimmt die zweite Ausführungsform der Brennkammer 100 hinsichtlich Aufbau und Funktion mit der vorstehend beschriebenen ersten Ausführungsform überein, auf deren Beschreibung insoweit Bezug genommen wird.

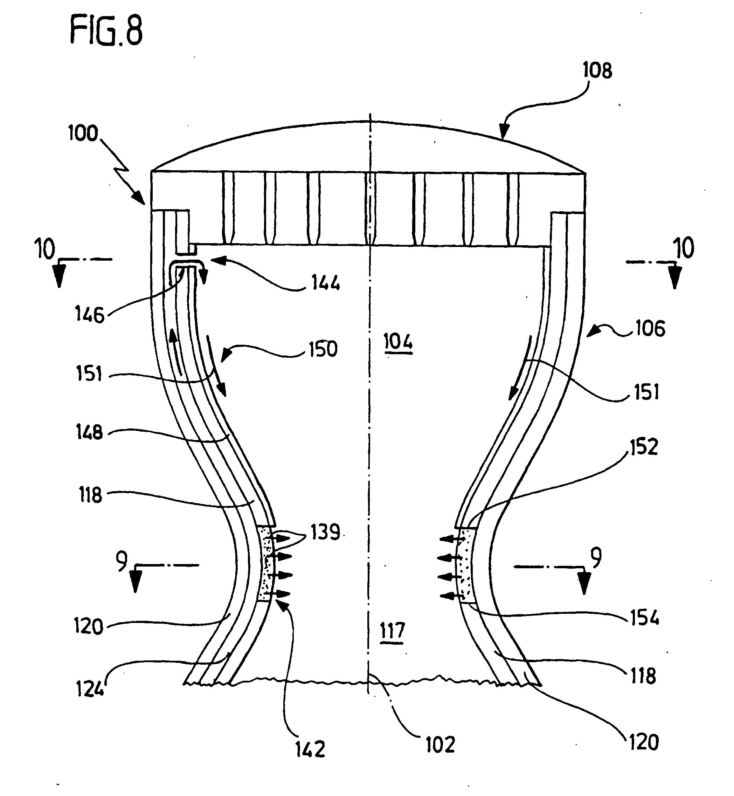

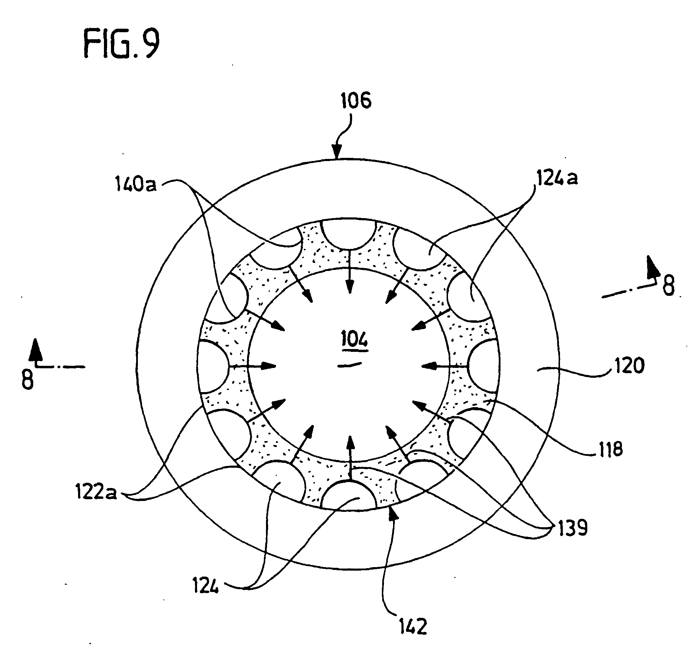

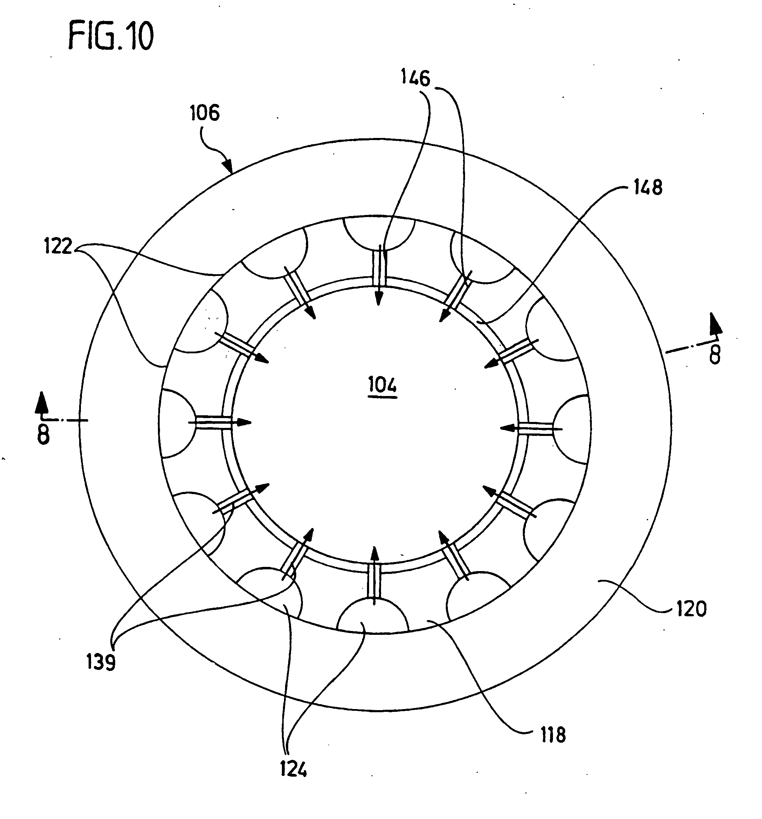

Eine in den Fig. 8 bis 10 dargestellte dritte Ausführungsform einer Brennkammer 100 unterscheidet sich von der vorstehend beschriebenen ersten Ausführungsform dadurch, daß der Innenmantel 118 einen im Bereich des Düsenhalses 116 angeordneten Transpirationskühlungsbereich 142 aufweist, in dem der Innenmantel 118 nicht aus einem dichten, porenfreien C/C-SiC-Material, sondern aus einem C/C-Material mit offener Porosität gebildet ist.

Ferner wird der Innenmantel 118 der dritten Ausführungsform in einem dem Einspritzkopf 108 benachbarten Injektionsbereich 144 von im wesentlichen radial zu der Längsachse 102 der Brennkammer 100 ausgerichteten Injektionskanälen 146 durchsetzt, die die Kühlmittelkanäle 124 mit dem Brennraum 104 verbinden.

Der zwischen dem Transpirationskühlungsbereich 142 und dem Einspritzkopf 108 liegende Bereich des Innenmantels 118 ist mit einer Beschichtung 148 aus einem TBC-Material, beispielsweise aus Zirkoniumoxid (ZrO₂) oder einer wärmeisolierenden Massivkeramik versehen. Der zwischen dem Transpirationskühlungsbereich 142 und den Injektionskanälen 146 liegende Bereich des Innenmantels 118 wird im folgenden als Filmkühlungsbereich 150 bezeichnet.

Bei der so aufgebauten dritten Ausführungsform der Brennkammer 100 werden im Betrieb die Kühlmethoden der Regenerativkühlung, der Transpirationskühlung und der Filmkühlung miteinander kombiniert.

Das in den Kühlmittelkanälen 124 in Richtung auf den Einspritzkopf 108 zu strömende Kühlmittel führt zunächst Wärme aus dem Brennkammermantel 106 in dem Düsenbereich 117 im Wege der Regenerativkühlung ab.

Durch den porösen Transpirationskühlungsbereich 142 des Innenmantels 118 kann ein Teil des die Kühlmittelkanäle 124 durchströmenden Kühlmittels über die Innenseite des Innenmantels 118 verteilt in den Brennraum 104 eintreten und dort einen kühlenden Grenzschichtfilm ausbilden.

Das in den Kühlmittelkanälen 124 verbleibende Kühlmittel strömt weiter zu dem Einspritzkopf 108 hin. Ein Teil dieses Kühlmittels wird durch die Injektionskanäle 146 in dem Injektionsbereich 144 des Innenmantels 118 in den Brennraum 104 injiziert und bildet an der mit einem TBC-Material beschichteten Innenseite des Innenmantels 118 einen weiteren Grenzschichtfilm aus, der von den im Brennraum 104 befindlichen Reaktionsgasen in Richtung auf den Düsenhals 116 mitgerissen wird und sich daher längs der Innenseite des Innenmantels 118 von dem Injektionsbereich 144 zu dem Transpirationskühlungsbereich 142 des Innenmantels 118 hin bewegt.

Dieser Grenzschichtfilm, in dem eine gerichtete Strömung des Kühlmittels stattfindet, schirmt den Innenmantel 118 in derselben Weise vor den heißen, bei der Verbrennung in dem Brennraum 104 entstehenden Reaktionsprodukten ab wie der in dem Transpirationskühlungsbereich 142 gebildete Grenzschichtfilm, der im wesentlichen keine gerichtete Strömung des Kühlmittels aufweist. Eine solche Kühlung mittels eines Grenzschichtfilms, bei der das den Grenzschichtfilm bildende Kühlmittel stromaufwärts von dem zu kühlenden Filmkühlungsbereich 150 dem Brennraum 104 zugeführt wird, wird, wie eingangs bereits ausgeführt, als Filmkühlung bezeichnet.

Die Strömung des Kühlmittels in dem Grenzschichtfilm ist in Fig. 8 durch Pfeile 151 dargestellt.

Außer durch die vorstehend beschriebene Filmkühlung wird der Innenmantel 118 in dem Filmkühlungsbereich 150 durch die Beschichtung 148 aus einem TBC-Material, welches eine geringe Wärmeleitfähigkeit aufweist, vor einer übermäßigen thermischen Beanspruchung geschützt.

Bei der Herstellung des Brennkammermantels 106 der dritten Ausführungsform der Brennkammer 100 wird wie folgt vorgegangen:
Zunächst wird aus einem kohlefaserverstärkten Kunststoff ein Transpirationskühlungsbereich-Vorkörper hergestellt und pyrolysiert, um ein poröses C/C-Material zu erhalten, wie vorstehend im Zusammenhang mit der Herstellung des Innenmantels 118 der ersten Ausführungsform der Brennkammer 100 beschrieben.

Der Transpirationskühlungsbereich-Vorkörper kann ein- oder mehrfach mit dem Precursor-Polymer reinfiltriert und erneut pyrolysiert werden, um einen gewünschten Porositätsgrad einzustellen.

Nachdem der gewünschte Porositätsgrad erreicht ist, werden an der Außenseite des Transpirationskühlungsbereiches 142 angeordnete Abschnitte 124a der Kühlmittelkanäle 124 durch mechanische Bearbeitung an dem Transpirationskühlungsbereichs-Vorkörper ausgebildet.

Um zu verhindern, daß bei einem späteren Silizierungsprozeß Silizium in den Transpirationskühlungsbereich 142 gelangen kann, werden die innenmantelseitigen Kühlkanaloberflächen 140a der an dem Transpirationskühlungsbereich 142 angeordneten Abschnitte 124a der Kühlmittelkanäle 124 mit einem Trennmittel, beispielsweise mit Bornitrid (BN), versehen. Ferner werden die zwischen jeweils zwei Kühlmittelkanalabschnitten 124a angeordneten Kontaktflächen 122a sowie eine den Transpirationskühlungsbereich 142 zu dem Filmkühlungsbereich 150 hin begrenzende Kontaktfläche 152 und eine den Transpirationskühlungsbereich 142 zu dem Düsenbereich 117 hin begrenzende Kontaktfläche 154 mittels eines Plasmabeschichtungsverfahrens oder durch Auftragen eines keramischen Schlickers porenfrei versiegelt.

Daraufhin werden der übrige Innenmantel 118 sowie der Außenmantel 120 der dritten Ausführungsform der Brennkammer 100 auf dieselbe Weise gebildet, die bereits im Zusammenhang mit der Herstellung der Ausführungsform der Brennkammer 100 beschrieben wurde.

Beim Flüssigsilizieren wird dabei das flüssige Silizium von der Außenseite des Außenmantels 120 her zugeführt, so daß das flüssige Silizium aufgrund der Versiegelung der Kontaktflächen 122a, 152 und 154 sowie aufgrund des an den innenmantelseitigen Kühlkanaloberflächen 140a angeordneten Trennmittels nicht in den Transpirationskühlungsbereich 142 des Innenmantels 118 eindringen kann und somit in diesem Bereich ein poröses C/C-Material erhalten bleibt.

Nach dem Flüssigsilizierschritt wird der zwischen dem Transpirationskühlungsbereich 142 und dem Einspritzkopf 108 liegende Bereich des Innenmantels 118, beispielsweise durch ein Spritzverfahren, mit der Beschichtung 148 aus einem TBC-Material versehen.

Schließlich werden die die Kühlmittelkanäle 124 mit dem Brennraum 104 verbindenden Injektionskanäle 146 durch mechanische Bearbeitung, beispielsweise durch Bohren, in dem Innenmantel 118 ausgebildet.

Im übrigen stimmt die dritte Ausführungsform der Brennkammer 100 mit der vorstehend beschriebenen ersten Ausführungsform überein, so daß insoweit auf die Beschreibung der ersten Ausführungsform Bezug genommen wird.

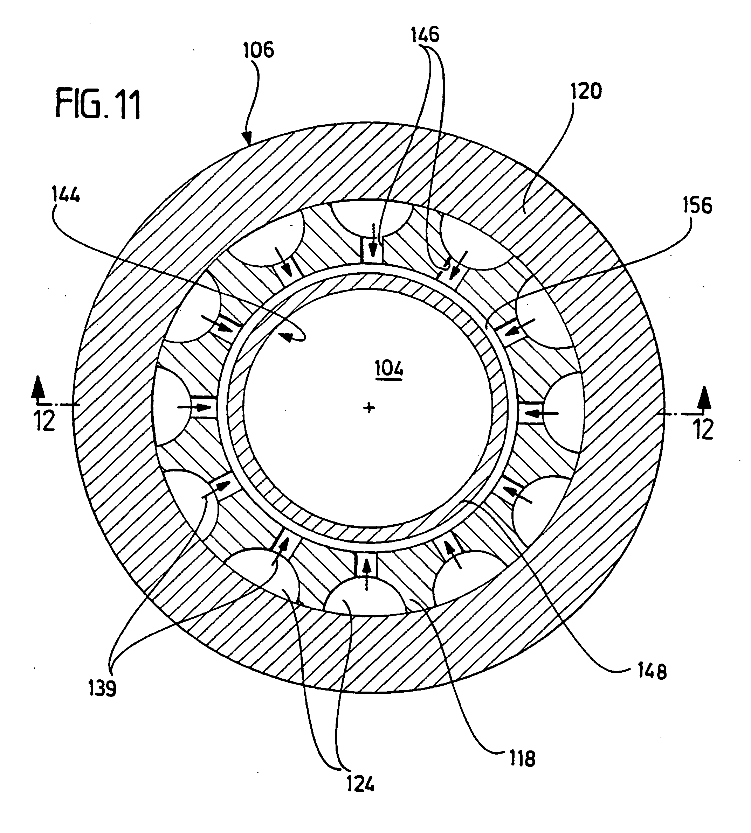

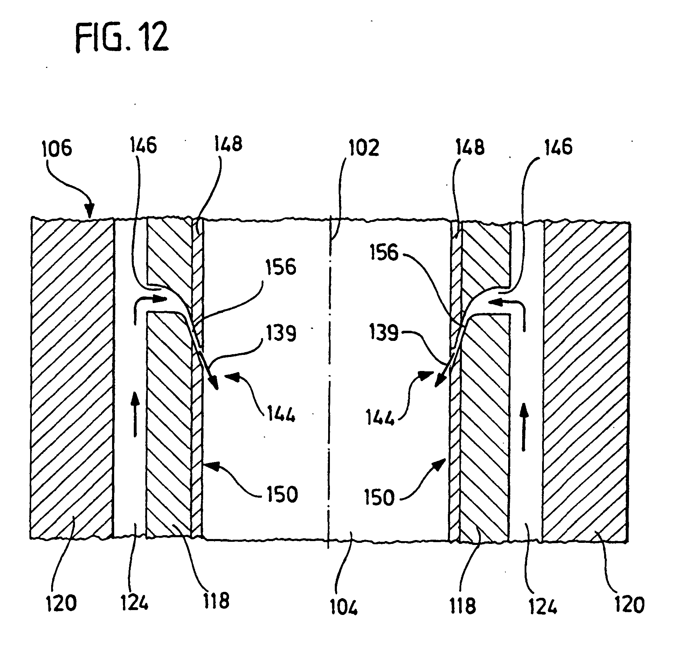

Eine in den Figuren 11 und 12 dargestellte vierte Ausführungsform einer Brennkammer 100 unterscheidet sich von der vorstehend beschriebenen dritten Ausführungsform dadurch, daß die Injektionskanäle 146 des Injektionsbereichs 144 nicht unmittelbar, sondern über einen Injektionsspalt in den Brennraum 104 der Brennkammer 100 münden.

Wie aus den Figuren 11 und 12 zu ersehen ist, ist ein ringförmiger Injektionsspalt 156 in dem Injektionsbereich 144 des Innenmantels 118 der Brennkammer 100 koaxial zu der Längsachse 102 der Brennkammer 100 so angeordnet, daß er einerseits in die Injektionskanäle 146 und andererseits in den Brennraum 104 mündet.

Der ringförmige Injektionsspalt 156 schließt mit der Innenseite des Innenmantels 118 einen kleinen Winkel ein, so daß das Kühlmittel, das aus den Kühlmittelkanälen 124 durch die Injektionskanäle 146 in den Injektionsspalt 156 strömt, im wesentlichen tangential zu der Innenseite des Innenmantels 118 in den Brennraum 104 eintritt und dort den für eine Filmkühlung des Filmkühlungsbereichs 150 des Innenmantels 118 benötigten Grenzschichtfilm ausbildet.

Im übrigen stimmt die vierte Ausführungsform der Brennkammer 100 hinsichtlich Aufbau und Funktion mit der vorstehend beschriebenen dritten Ausführungsform überein, auf deren Beschreibung insoweit Bezug genommen wird.

Bei der Herstellung des Brennkammermantels 106 der vierten Ausführungsform der Brennkammer 100 wird ebenso vorgegangen, wie vorstehend im Zusammenhang mit der Herstellung des Brennkammermantels 106 der dritten Ausführungsform der Brennkammer 100 beschrieben, wobei der die Injektionskanäle 146 mit dem Brennraum 104 verbindende ringförmige Injektionsspalt 156 durch mechanische Bearbeitung in dem Innenmantel 118 ausgebildet wird.

Ein Injektionsspalt für das Einblasen von Kühlmittel in den Brennraum zur Bildung eines kühlenden Grenzschichtfilms kann auch als Ringspalt in dem Einspritzkopf 108 ausgebildet sein. In diesem Fall ist es möglich, den Ringspalt genau parallel zu der Innenseite des Innenmantels 118 der Brennkammer 100 auszurichten, so daß das den Grenzschichtfilm bildende Kühlmittel genau tangential zu der Innenseite des Innenmantels eingeblasen werden kann.

## Patentansprüche

1. Transpirationsgekühlte Brennkammer, insbesondere für ein Raketentriebwerk, umfassend
einen Brennraum (104),
einen den Brennraum (104) umschließenden Innenmantel (118),
einen den Innenmantel (118) umschließenden Außenmantel (120) und zwischen dem Innenmantel (118) und dem Außenmantel (120) ausgebildete Kühlmittelkanäle (124), wobei der Außenmantel (120) aus einem Faserkeramikmaterial gebildet ist, das Material des Innenmantels (118) ein Material mit offener Porosität zur Ermöglichung der Transpirationskühlung umfaßt und der Innenmantel (118) aus einem Faserkeramikmaterial, das kohlefaserverstärkten Kohlenstoff umfaßt und aus in eine Kohlenstoffmatrix eingebetteten Kohlefasern besteht, oder aus Graphit gebildet ist.

2. Brennkammer nach Anspruch 1, **dadurch gekennzeichnet, daß** das Faserkeramikmaterial des Außenmantels (120) kohlefaserverstärkten Kohlenstoff umfaßt.

3. Brennkammer nach einem der Ansprüche 1 oder 2, **dadurch gekennzeichnet, daß** das Material des Außenmantels (120) keine Porosität aufweist.

4. Brennkammer nach Anspruch 3, **dadurch gekennzeichnet, daß** das Material des Außenmantels (120) ein kohlefaserverstärktes Siliziumcarbid umfaßt.

5. Brennkammer nach Anspruch 4, **dadurch gekennzeichnet, daß** das Material des Außenmantels ein C/C-SiC-Material umfaßt.

6. Brennkammer nach einem der vorangehenden Ansprüche, **dadurch gekennzeichnet, daß** der Porositätsgrad des eine offene Porosität aufweisenden Materials des Innenmantels (118) in einer radialen Richtung der Brennkammer (100) variiert.

7. Brennkammer nach Anspruch 6, **dadurch gekennzeichnet, daß** der Porositätsgrad des eine offene Porosität aufweisenden Materials des Innenmantels (118) zu der Innenseite des Innenmantels (118) hin zunimmt.

8. Brennkammer nach einem der vorangehenden Ansprüche, **dadurch gekennzeichnet, daß** der Porositätsgrad des eine offene Porosität aufweisenden Materials des Innenmantels (118) in einer Längsrichtung der Brennkammer (100) variiert.

9. Brennkammer nach einem der Ansprüche 1 bis 8, **dadurch gekennzeichnet, daß** der Innenmantel (118) der Brennkammer (100) einen Kühlmittelzuführbereich (144) aufweist, durch den ein Kühlmittel dem Brennraum (104) zuführbar ist, und einen Filmkühlungsbereich (150) aufweist, der kein poröses Material umfaßt, wobei der Filmkühlungsbereich (150) in Längsrichtung der Brennkammer (100) auf den Kühlmittelzuführbereich (144) folgt.

10. Brennkammer nach Anspruch 9, **dadurch gekennzeichnet, daß** der Kühlmittelzuführbereich (144) des Innenmantels ein Material mit einer offenen Porosität umfaßt.

11. Brennkammer nach einem der Ansprüche 9 oder 10, **dadurch gekennzeichnet, daß** der Kühlmittelzuführbereich (144) des Innenmantels (118) von mindestens einem Injektionskanal (146) durchsetzt wird, welcher einen Kühlmittelkanal (124) mit dem Brennraum (104) verbindet.

12. Brennkammer nach einem der Ansprüche 9 bis 11, **dadurch gekennzeichnet, daß** der Innenmantel (118) der Brennkammer (100) einen Transpirationskühlungsbereich (142) aufweist, der ein Material mit einer offenen Porosität umfaßt und in Längsrichtung der Brennkammer (100) auf den Filmkühlungsbereich (150) folgt.

13. Brennkammer nach einem der vorangehenden Ansprüche 1 bis 12, **dadurch gekennzeichnet, daß** ein Bereich (150) des Innenmantels (118) an seiner Innenseite eine Beschichtung (148) aus einem TBC-Material aufweist.

14. Brennkammer nach einem der Ansprüche 1 bis 13, **dadurch gekennzeichnet, daß** die Kühlmittelkanäle (124) einen in Längsrichtung der Brennkammer (100) variierenden Querschnitt aufweisen.

15. Brennkammer nach einem der Ansprüche 1 bis 14, **dadurch gekennzeichnet, daß** die Brennkammer (100) einen Einspritzkopf (108) aufweist, der aus einem Faserkeramikmaterial gebildet ist.

16. Brennkammer nach Anspruch 15, **dadurch gekennzeichnet, daß** der Einspritzkopf (108) einstückig mit dem Innenmantel (118) und/oder dem Außenmantel (120) ausgebildet ist.

17. Brennkammer nach einem der Ansprüche 15 oder 16, **dadurch gekennzeichnet, daß** das Material des Einspritzkopfes (108) ein Material mit einer offenen Porosität umfaßt.

18. Verfahren zur Herstellung einer transpirationsgekühlten Brennkammer, insbesondere für ein Raketentriebwerk umfassend einen Brennraum, einen den Brennraum umschließenden Innenmantel, einen den Innenmantel umschließenden Außenmantel und zwischen dem Innenmantel und dem Außenmantel ausgebildete Kühlmittelkanäle, wobei der Außenmantel aus einem Faserkeramikmaterial gebildet ist und der Innenmantel aus einem Faserkeramikmaterial mit offener Porosität gebildet ist, umfassend folgende Verfahrensschritte:
- Herstellen eines Innenmantel-Vorkörpers aus einem faserverstärkten Kunststoff;
- Pyrolysieren des Innenmantel-Vorkörpers, wobei der Innenmantel-Vorkörper nach einem ersten Pyrolysieren mit einem Precursor-Material infiltriert und anschließend erneut pyrolysiert wird
- Aufbringen eines Außenmantel-Vorkörpers aus faserverstärktem Kunststoff auf den pyrolysierten Innenmantel-Vorkörper;
- Pyrolysieren des aus dem Außenmantel-Vorkörper und dem Innenmantel-Vorkörper gebildeten Bauteils; und
- Zuführen von Silizium zu dem pyrolysierten Außenmantel-Vorkörper zur Bildung einer Siliziumcarbid-Matrix im Material des Außenmantels.

19. Verfahren nach Anspruch 18, **dadurch gekennzeichnet, daß** der Innenmantel-Vorkörper wiederholt mit einem Precursor-Material infiltriert und pyrolysiert wird, bis ein vorgegebener Porositätsgrad des Materials des Innenmantel-Vorkörpers erreicht ist.

20. Verfahren nach Anspruch 18 oder 19, **dadurch gekennzeichnet, daß** beim Herstellen des Innenmantel-Vorkörpers aus dem faserverstärkten Kunststoff dem Material des Innenmantel-Vorkörpers ein Zusatzstoff zugegeben wird, welcher beim Pyrolysieren ausgast, so daß ein vorgegebener Porositätsgrad des Innenmantel-Vorkörpers erreicht wird.

21. Verfahren nach einem der Ansprüche 18 bis 20, **dadurch gekennzeichnet, daß** ein zum Herstellen des Innenmantel-Vorkörpers aus dem faserverstärkten Kunststoff verwendetes Fasergerüst vor dem Herstellen des Innenmantel-Vorkörpers erwärmt wird.

22. Verfahren nach einem der Ansprüche 18 bis 21, **dadurch gekennzeichnet, daß** ein zum Aufbringen des Außenmantel-Vorkörpers aus dem faserverstärkten Kunststoff verwendetes Fasergerüst vor dem Aufbringen des Außenmantel-Vorkörpers erwärmt wird.

23. Verfahren nach einem der Ansprüche 18 oder 22, **dadurch gekennzeichnet, daß** das Fasergerüst auf eine Temperatur im Bereich von 600°C bis 900°C erwärmt wird.

24. Verfahren nach einem der Ansprüche 18 bis 23, **dadurch gekennzeichnet, daß** vor dem Aufbringen des Außenmantel-Vorkörpers eine gewünschte Form von Kühlmittelkanälen aufweisende Verlustmassenkörper auf den pyrolysierten Innenmantel-Vorkörper aufgebracht werden.

25. Verfahren nach Anspruch 24, **dadurch gekennzeichnet, daß** die Verlustmassenkörper beim Pyrolysieren des aus.dem Außenmantel-Vorkörper und dem Innenmantel-Vorkörper gebildeten Bauteils thermisch zerstört werden.

26. Verfahren nach einem der Ansprüche 24 oder 25, **dadurch gekennzeichnet, daß** die an den Außenmantel-Vorkörper grenzenden Außenseiten der Verlustmassenkörper versiegelt werden.

27. Verfahren nach einem der Ansprüche 18 bis 26, **dadurch gekennzeichnet, daß** vor dem Aufbringen des Außenmantel-Vorkörpers Kühlmittelkanäle an der Außenseite des Innenmantel-Vorkörpers ausgebildet werden.

28. Verfahren nach Anspruch 27, **dadurch gekennzeichnet, daß** an die Kühlmittelkanäle grenzende Bereiche der Außenseite des Innenmantel-Vorkörpers mit einem Trennmittel versehen werden.

29. Verfahren nach Anspruch 28, **dadurch gekennzeichnet, daß** das Trennmmittel nach dem Zuführen von Silizium zu dem pyrolysierten Außenmantel-Vorkörper durch Spülen der Kühlmittelkanäle mit einem das Trennmittel lösenden Stoff entfernt wird.

30. Verfahren nach einem der Ansprüche 27 bis 29, **dadurch gekennzeichnet, daß** die Kühlmittelkanäle vor dem Aufbringen des Außenmantel-Vorkörpers mit einem aushärtbaren Material gefüllt werden.

31. Verfahren nach Anspruch 30, **dadurch gekennzeichnet, daß** das aushärtbare Material nach dem Zuführen von Silizium zu dem pyrolysierten Außenmantel-Vorkörper chemisch und/oder mechanisch entfernt wird.

32. Verfahren nach einem der Ansprüche 18 bis 31, **dadurch gekennzeichnet, daß** an den Außenmantel grenzende Kontaktbereiche der Außenseite des Innenmantel-Vorkörpers vor dem Aufbringen des Außenmantel-Vorkörpers versiegelt werden.

33. Verfahren nach Anspruch 32, **dadurch gekennzeichnet, daß** die Kontaktbereiche mittels eines Plasmabeschichtungsprozesses versiegelt werden.

34. Verfahren nach Anspruch 32, **dadurch gekennzeichnet, daß** die Kontaktbereiche durch Auftragen eines keramischen Schlickers versiegelt werden.

35. Verfahren nach einem der Ansprüche 18 bis 33, **dadurch gekennzeichnet, daß** einem Bereich des Innenmantel-Vorkörpers Silizium zur Bildung einer Siliziumcarbid-Matrix im Material des Innenmantels zugeführt wird.

36. Verfahren nach Anspruch 35, **dadurch gekennzeichnet, daß** der Bereich des Innenmantels, dem das Silizium zugeführt worden ist, auf seiner Innenseite mit einer Beschichtung aus einem TBC-Material versehen wird.

37. Verfahren nach einem der Ansprüche 18 bis 36, **dadurch gekennzeichnet, daß** ein erster Teil des Innenmantel-Vorkörpers aus einem faserverstärkten Kunststoff hergestellt wird, der erste Teil des Innenmantel-Vorkörpers pyrolysiert wird, Kontaktbereiche der Außenseite des ersten Teils des Innenmantel-Vorkörpers versiegelt werden, ein weiterer Teil des Innenmantel-Vorkörpers, der an mindestens einem der Kontaktbereiche an den ersten Teil des Innenmantel-Vorkörpers angrenzt, aus einem faserverstärkten Kunststoff hergestellt wird und der weitere Teil des Innenmantel-Vorkörpers pyrolysiert wird.

## Claims

1. Combustion chamber cooled by transpiration, in particular, for a rocket engine, comprising
a combustion area (104),
an inner shell (118) surrounding the combustion area (104),
an outer shell (120) surrounding the inner shell (118) and coolant passages (124) formed between the inner shell (118) and the outer shell (120), wherein the outer shell (120) is formed from a fibrous ceramic material, the material of the inner shell (118) comprises a material with an open porosity to facilitate the transpiration cooling and the inner shell (118) is formed from a fibrous ceramic material, said material comprising carbon fibre-reinforced carbon and consisting of carbon fibres embedded in a carbon matrix, or from graphite.

2. Combustion chamber as defined in claim 1, **characterized in that** the fibrous ceramic material of the outer shell (120) comprises carbon fibre-reinforced carbon.

3. Combustion chamber as defined in one of claims 1 to 2, **characterized in that** the material of the outer shell (120) has no porosity.

4. Combustion chamber as defined in claim 3, **characterized in that** the material of the outer shell (120) comprises a carbon fibre-reinforced silicon carbide.

5. Combustion chamber as defined in claim 4, **characterized in that** the material of the outer shell comprises a C/C-SiC material.

6. Combustion chamber as defined in any one of the preceding claims, **characterized in that** the degree of porosity of the material of the inner shell (118) having an open porosity varies in a radial direction of the combustion chamber (100).

7. Combustion chamber as defined in claim 6, **characterized in that** the degree of porosity of the material of the inner shell (118) having an open porosity increases towards the inner side of the inner shell (118).

8. Combustion chamber as defined in any one of the preceding claims, **characterized in that** the degree of porosity of the material of the inner shell (118) having an open porosity varies in a longitudinal direction of the combustion chamber (100).

9. Combustion chamber as defined in any one of claims 1 to 8, **characterized in that** the inner shell (118) of the combustion chamber (100) has a coolant supply area (144), a coolant being suppliable to the combustion area (104) through said coolant supply area, and has a film cooling area (150) comprising no porous material, wherein the film cooling area (150) follows the coolant supply area (144) in longitudinal direction of the combustion chamber (100).

10. Combustion chamber as defined in claim 9, **characterized in that** the coolant supply area (144) of the inner shell comprises a material with an open porosity.

11. Combustion chamber as defined in one of claims 9 or 10, **characterized in that** the coolant supply area (144) of the inner shell (118) is penetrated by at least one injection passage (146) connecting a coolant passage (124) with the combustion area (104).

12. Combustion chamber as defined in any one of claims 9 to 11, **characterized in that** the inner shell (118) of the combustion chamber (100) has a transpiration cooling area (142) comprising a material with an open porosity and following the film cooling area (150) in longitudinal direction of the combustion chamber (100).

13. Combustion chamber as defined in any one of the preceding claims 1 to 12, **characterized in that** one area (150) of the inner shell (118) has a coating (148) consisting of a TBC material on its inner side.

14. Combustion chamber as defined in any one of claims 1 to 13, **characterized in that** the coolant passages (124) have a cross section varying in longitudinal direction of the combustion chamber (100).

15. Combustion chamber as defined in any one of claims 1 to 14, **characterized in that** the combustion chamber (100) has an injection head (108) formed from a fibrous ceramic material.

16. Combustion chamber as defined in claim 15, **characterized in that** the injection head (108) is designed in one piece with the inner shell (118) and/or the outer shell (120).

17. Combustion chamber as defined in one of claims 15 or 16, **characterized in that** the material of the injection head (108) comprises a material with an open porosity.

18. Method for the production of a combustion chamber cooled by transpiration, In particular, for a rocket engine comprising a combustion area, an inner shell surrounding the combustion area, an outer shell surrounding the inner shell and coolant passages formed between the inner shell and the outer shell, wherein the outer shell is formed from a fibrous ceramic material and the inner shell is formed from a fibrous ceramic material with an open porosity, comprising the following method steps:
- producing an inner shell preliminary member from a fibre reinforced plastic;
- pyrolysing the inner shell preliminary member, wherein the inner shell preliminary member is infiltrated with a precursor material following a first pyrolysation and subsequently pyrolysed again;
- applying an outer shell preliminary member consisting of fibre reinforced plastic to the pyrolysed inner shell preliminary member;
- pyrolysing the structural unit formed from the outer shell preliminary member and the inner shell preliminary member; and
- supplying silicon to the pyrolysed outer shell preliminary member to form a silicon carbide matrix in the material of the outer shell.

19. Method as defined in claim 18, **characterized in that** the inner shell preliminary member is repeatedly infiltrated with a precursor material and pyrolysed until a predetermined degree of porosity of the material of the inner shell preliminary member is attained.

20. Method as defined in claim 18 or 19, **characterized in that** during the production of the inner shell preliminary member from the fibre reinforced plastic an additive is added to the material of the inner shell preliminary member, said additive outgassing during the pyrolysation so that a predetermined degree of porosity of the inner shell preliminary member is attained.

21. Method as defined in any one of claims 18 to 20, **characterized in that** a fibre structure used for the production of the inner shell preliminary member from the fibre reinforced plastic is heated prior to the production of the inner shell preliminary member.

22. Method as defined in any one of claims 18 to 21, **characterized in that** a fibre structure used for applying the outer shell preliminary member consisting of the fibre reinforced plastic is heated prior to the application of the outer shell preliminary member.

23. Method as defined in one of claims 18 or 22, **characterized in that** the fibre structure is heated to a temperature in the range of 600°C to 900°C.

24. Method as defined in any one of claims 18 to 23, **characterized in that** prior to the application of the outer shell preliminary member loss mass members having a desired shape of coolant passages are applied to the pyrolysed inner shell preliminary member.

25. Method as defined in claim 24, **characterized in that** the loss mass members are thermally destroyed during the pyrolysation of the structural unit formed from the outer sheh preliminary member and the inner shell preliminary member.

26. Method as defined in one of claims 24 or 25, **characterized in that** the outer sides of the loss mass members bordering on the outer shell preliminary member are sealed.

27. Method as defined in any one of claims 18 to 26, **characterized in that** prior to the application of the outer shell preliminary member coolant passages are formed on the outer side of the inner shell preliminary member.

28. Method as defined in claim 27, **characterized in that** areas of the outer side of the inner shell preliminary member bordering on the coolant passages are provided with a separating agent.

29. Method as defined in claim 28, **characterized in that** the separating agent is removed after the supply of silicon to the pyrolysed outer shell preliminary member by flushing the coolant passages with a substance dissolving the separating agent.

30. Method as defined in any one of claims 27 to 29, **characterized in that** the coolant passages are filled with a hardenable material prior to the application of the outer shell preliminary member.

31. Method as defined in claim 30, **characterized in that** the hardenable material is removed chemically and/or mechanically after the supply of silicon to the pyrolysed outer shell preliminary member.

32. Method as defined in any one of claims 18 to 31, **characterized in that** contact areas of the outer side of the inner shell preliminary member bordering on the outer shell are sealed prior to the application of the outer shell preliminary member.

33. Method as defined in claim 32, **characterized in that** the contact areas are sealed by means of a plasma coating process.

34. Method as defined in claim 32, **characterized in that** the contact areas are sealed by applying a ceramic slurry.

35. Method as defined in any one of claims 18 to 33, **characterized in that** silicon is supplied to an area of the inner shell preliminary member for forming a silicon carbide matrix in the material of the inner shell.

36. Method as defined in claim 35, **characterized in that** the area of the inner shell supplied with the silicon is provided with a coating consisting of a TBC material on its inner side.

37. Method as defined in any one of claims 18 to 36, **characterized in that** a first section of the inner shell preliminary member is produced from a fibre reinforced plastic, the first section of the inner shell preliminary member is pyrolysed, contact areas of the outer side of the first section of the inner shell preliminary member are sealed, an additional section of the inner shell preliminary member bordering on the first section of the inner shell preliminary member at at least one of the contact areas is produced from a fibre reinforced plastic and the additional section of the inner shell preliminary member is pyrolysed.

## Revendications

1. Chambre de combustion refroidie par transpiration, en particulier pour un propulseur de fusée, comprenant
un espace de combustion (104),
une enveloppe intérieure (118) entourant l'espace de combustion (104),
une enveloppe extérieure (120) entourant l'enveloppe intérieure (118) et des conduits d'agent réfrigérant (124) formés entre l'enveloppe intérieure (118) et l'enveloppe extérieure (120), l'enveloppe extérieure (120) étant constituée d'un matériau de fibre céramique, le matériau de l'enveloppe intérieure (118) comprenant un matériau ayant une porosité ouverte pour permettre le refroidissement par transpiration et l'enveloppe intérieure (118) étant constituée d'un matériau de fibre céramique, qui comprend du carbone renforcé par des fibres de carbone et qui est constituée de fibres de carbone incorporées dans une matrice de carbone, ou de graphite.

2. Chambre de combustion selon la revendication 1, **caractérisé en ce que** le matériau de fibre céramique de l'enveloppe extérieure (120) comprend du carbone renforcé par des fibres de carbone.

3. Chambre de combustion selon l'une quelconque des revendications 1 ou 2, **caractérisé en ce que** le matériau de l'enveloppe extérieure (120) ne présente aucune porosité.

4. Chambre de combustion selon la revendication 3, **caractérisé en ce que** le matériau de l'enveloppe extérieure (120) comprend un carbure de silicium renforcé par des fibres de carbone.

5. Chambre de combustion selon la revendication 4, **caractérisé en ce que** le matériau de l'enveloppe extérieure comprend un matériau C/C-SiC.

6. Chambre de combustion selon l'une quelconque des revendications précédentes, **caractérisé en ce que** le degré de porosité d'un matériau de l'enveloppe intérieure (118) présentant une porosité ouverte varie dans une direction radiale de la chambre de combustion (100).

7. Chambre de combustion selon la revendication 6, **caractérisé en ce que** le degré de porosité d'un matériau de l'enveloppe intérieure (118) présentant une porosité ouverte augmente en direction du côté intérieur de l'enveloppe intérieure (118).

8. Chambre de combustion selon l'une quelconque des revendications précédentes, **caractérisé en ce que** le degré de porosité d'un matériau de l'enveloppe intérieure (118) présentant une porosité ouverte varie dans une direction longitudinale de la chambre de combustion (100).

9. Chambre de combustion selon l'une quelconque des revendications 1 à 8, **caractérisé en ce que** l'enveloppe intérieure (118) de la chambre de combustion (100) comporte une zone d'amenée d'agent réfrigérant (144) par l'intermédiaire de laquelle un agent réfrigérant peut être amené à l'espace de combustion (104) et une zone de refroidissement de film (150) qui ne présente aucun matériau poreux, la zone de refroidissement de film (150) suivant la zone d'amenée d'agent réfrigérant (144) dans la direction longitudinale de la chambre de combustion (100).

10. Chambre de combustion selon la revendication 9, **caractérisé en ce que** la zone d'amenée d'agent réfrigérant (144) de l'enveloppe intérieure présente un matériau avec une porosité ouverte.

11. Chambre de combustion selon l'une quelconque des revendications 9 ou 10, **caractérisé en ce que** la zone d'amenée d'agent réfrigérant (144) de l'enveloppe intérieure (118) est traversée par au moins un conduit d'injection (146) qui relie un conduit d'agent réfrigérant (124) à l'espace de combustion (104).

12. Chambre de combustion selon l'une quelconque des revendications 9 à 11, **caractérisé en ce que** l'enveloppe intérieure (118) de la chambre de combustion (100) comporte une zone de refroidissement par transpiration (142) qui présente un matériau avec une porosité ouverte et qui suit la zone de refroidissement de film (150) dans la direction longitudinale de la chambre de combustion (100).

13. Chambre de combustion selon l'une quelconque des revendications 1 à 12, **caractérisé en ce qu'**une zone (150) de l'enveloppe intérieure (118) présente un revêtement (148) constitué d'un matériau TBC sur son côté intérieur.

14. Chambre de combustion selon l'une quelconque des revendications 1 à 13, **caractérisé en ce que** les conduits d'agent réfrigérant (124) présentent une section transversale variable dans la direction longitudinale de la chambre de combustion (100).

15. Chambre de combustion selon l'une quelconque des revendications 1 à 14, **caractérisé en ce que** la chambre de combustion (100) comporte une tête d'injection (108) qui est constituée d'un matériau de fibre céramique.

16. Chambre de combustion selon la revendication 15, **caractérisé en ce que** la tête d'injection (108) est formée en une seule partie avec l'enveloppe intérieure (118) et/ou l'enveloppe extérieure (120).

17. Chambre de combustion selon l'une quelconque des revendications 15 ou 16, **caractérisé en ce que** le matériau de la tête d'injection (108) présente un matériau avec une porosité ouverte.

18. Procédé pour la fabrication d'une chambre de combustion refroidie par transpiration, en particulier pour un propulseur de fusée, comprenant un espace de combustion, une enveloppe intérieure entourant l'espace de combustion, une enveloppe extérieure entourant l'enveloppe intérieure et des conduits d'agent réfrigérant formés entre l'enveloppe intérieure et l'enveloppe extérieure, l'enveloppe extérieure étant constituée d'un matériau de fibre céramique et l'enveloppe intérieure étant constituée d'un matériau de fibre céramique ayant une porosité ouverte, comportant les étapes de procédé suivantes :
- fabrication d'un avant-corps d'enveloppe intérieure dans une matière synthétique renforcée par des fibres ;
- pyrolyse de l'avant-corps d'enveloppe intérieure, l'avant-corps d'enveloppe intérieure étant infiltré avec un matériau précurseur après la première pyrolyse, puis de nouveau pyrolyse ;
- pose d'un avant-corps d'enveloppe extérieure constitué d'une matière synthétique renforcée par des fibres sur l'avant-corps d'enveloppe intérieure pyrolysé ;
- pyrolyse du composant constitué par l'avant-corps d'enveloppe extérieure et l'avant-corps d'enveloppe intérieure ; et
- apport de silicium à l'avant-corps d'enveloppe extérieure pyrolysé pour former une matrice de carbure de silicium dans le matériau de l'enveloppe extérieure.

19. Procédé selon la revendication 18, **caractérisé en ce que** l'avant-corps d'enveloppe intérieure est de nouveau infiltré avec un matériau précurseur et pyrolysé jusqu'à ce qu'un degré de porosité prédéterminé du matériau de l'avant-corps d'enveloppe intérieure soit atteint.

20. Procédé selon la revendication 18 ou 19, **caractérisé en ce que**, lors de la fabrication de l'avant-corps d'enveloppe intérieure constitué de matière synthétique renforcée par des fibres, un adjuvant qui dégage du gaz lors de la pyrolyse est ajouté au matériau de l'avant-corps d'enveloppe intérieure, de sorte qu'un degré de porosité prédéterminé de l'avant-corps d'enveloppe intérieure est atteint.

21. Procédé selon l'une quelconque des revendications 18 à 20, **caractérisé en ce qu'**une ossature fibreuse utilisée pour la fabrication de l'avant-corps d'enveloppe intérieure constitué de matière synthétique renforcée par des fibres est réchauffée avant la fabrication de l'avant-corps d'enveloppe intérieure.

22. Procédé selon l'une quelconque des revendications 18 à 21, **caractérisé en ce qu'**une ossature fibreuse utilisée pour la pose de l'avant-corps d'enveloppe extérieure constitué d'une matière synthétique renforcée par des fibres est réchauffée avant la pose de l'avant-corps d'enveloppe extérieure.

23. Procédé selon l'une quelconque des revendications 18 ou 22, **caractérisé en ce que** l'ossature fibreuse est réchauffée à une température comprise entre 600°C et 900°C.

24. Procédé selon l'une quelconque des revendications 18 à 23, **caractérisé en ce que**, avant la pose de l'avant-corps d'enveloppe extérieure, une forme souhaitée de corps massiques de déperdition comportant des conduits d'agent réfrigérant est posée sur l'avant-corps d'enveloppe intérieure pyrolysé.

25. Procédé selon la revendication 24, **caractérisé en ce que** les corps massiques de déperdition sont détruits thermiquement pendant la pyrolyse du composant constitué par l'avant-corps d'enveloppe extérieure et l'avant-corps d'enveloppe intérieure.

26. Procédé selon l'une quelconque des revendications 24 ou 25, **caractérisé en ce que** les côtés extérieurs des corps massiques de déperdition jouxtant l'avant-corps d'enveloppe extérieure sont scellés.

27. Procédé selon l'une quelconque des revendications 18 à 26, **caractérisé en ce que**, avant la pose de l'avant-corps d'enveloppe extérieure, des conduits d'agent réfrigérant sont formés sur le côté extérieur de l'avant-corps d'enveloppe intérieure.

28. Procédé selon la revendication 27, **caractérisé en ce que** les zones du côté extérieur de l'avant-corps d'enveloppe intérieure jouxtant les conduits d'agent réfrigérant sont munies d'un agent de séparation.

29. Procédé selon la revendication 28, **caractérisé en ce que**, après l'apport de silicium à l'avant-corps d'enveloppe extérieure pyrolysé, l'agent de séparation est éliminé par la purge des conduits d'agent réfrigérant avec un produit dissolvant l'agent de séparation.

30. Procédé selon l'une quelconque des revendications 27 à 29, **caractérisé en ce que**, avant la pose de l'avant-corps d'enveloppe extérieure, les conduits d'agent réfrigérant sont remplis avec un matériau durcissable.

31. Procédé selon la revendication 30, **caractérisé en ce que** le matériau durcissable est éliminé chimiquement et/ou mécaniquement après l'apport de silicium à l'avant-corps d'enveloppe extérieure pyrolysé.

32. Procédé selon l'une quelconque des revendications 18 à 31, **caractérisé en ce que** les zones de contact du côté extérieur de l'avant-corps d'enveloppe intérieure jouxtant l'enveloppe extérieure sont scellées avant la pose de l'avant-corps d'enveloppe extérieure.

33. Procédé selon la revendication 32, **caractérisé en ce que** les zones de contact sont scellées à l'aide d'un processus de déposition au plasma.

34. Procédé selon la revendication 32, **caractérisé en ce que** les zones de contact sont scellées par l'application d'une barbotine céramique.

35. Procédé selon l'une quelconque des revendications 18 à 33, **caractérisé en ce que** du silicium est apporté dans une zone de l'avant-corps d'enveloppe intérieure pour la formation d'une matrice de carbure de silicium dans le matériau de l'enveloppe intérieure.

36. Procédé selon la revendication 35, **caractérisé en ce que** la zone de l'enveloppe intérieure dans laquelle le silicium a été apporté est munie d'un revêtement constitué d'un matériau TBC sur son côté intérieur.

37. Procédé selon l'une quelconque des revendications 18 à 36, **caractérisé en ce qu'**une première partie de l'avant-corps d'enveloppe intérieure est fabriquée dans une matière synthétique renforcée par des fibres, la première partie de l'avant-corps d'enveloppe intérieure est pyrolysée, les zones de contact du côté extérieur de la première partie de l'avant-corps d'enveloppe intérieure sont scellées, une autre partie de l'avant-corps d'enveloppe intérieure qui, dans au moins l'une des zones de contact, jouxte la première partie de l'avant-corps d'enveloppe intérieure est fabriquée dans une matière synthétique renforcée par des fibres et l'autre partie de l'avant-corps d'enveloppe intérieure est pyrolysée.
